(19) **Europäisches Patentamt**
**European Patent Office**
**Office européen des brevets**

(11) **EP 4 478 187 A1**

(12) **EUROPEAN PATENT APPLICATION**
published in accordance with Art. 153(4) EPC

(43) Date of publication:
**18.12.2024 Bulletin 2024/51**

(21) Application number: **24765933.7**

(22) Date of filing: **06.03.2024**

(51) International Patent Classification (IPC):
***G06F 9/451*** *(2018.01)*

(52) Cooperative Patent Classification (CPC):
**G06F 3/04845; G06F 9/451; G06T 15/00**

(86) International application number:
**PCT/CN2024/080397**

(87) International publication number:
**WO 2024/183771 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2023  CN 202310267611**

(71) Applicant: **Huawei Technologies Co., Ltd.
Shenzhen, Guangdong 518129 (CN)**

(72) Inventors:
• **LIU, Xiaoyang
Shenzhen, Guangdong 518129 (CN)**
• **YANG, Chunlin
Shenzhen, Guangdong 518129 (CN)**
• **XU, Yuqiong
Shenzhen, Guangdong 518129 (CN)**
• **XIAO, Jian
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **RENDERING METHOD AND RELATED DEVICE**

(57)     Embodiments of this application provide a rendering method and a related device, and relate to the field of electronic devices. In the method, a grouping result of a to-be-displayed frame is first determined. The grouping result may enable drawing duration of the to-be-displayed frame to be less than or equal to a sum of drawing duration of at least one application interface, namely, drawing duration required by the to-be-displayed frame when no grouping is performed. Then, a drawing task of the to-be-displayed frame is grouped based on the grouping result to obtain at least one drawing task group.

Finally, the drawing task in the at least one drawing task group is processed by using at least one drawing thread to obtain at least one drawing result. The at least one drawing result is used to obtain an overall drawing result of the to-be-displayed frame through synthesis, to render the to-be-displayed frame. It can be learned that, according to the rendering method in this solution, the grouping result of the to-be-displayed frame is predetermined, to implement optimal rendering of the to-be-displayed frame, so that rendering efficiency of the to-be-displayed frame can be effectively improved.

```
┌─────────────────────────────────────────────────────┐
│  Determine a grouping result of a to-be-displayed frame  │──201
└─────────────────────────────────────────────────────┘
                          │
                          ▼
┌─────────────────────────────────────────────────────┐
│  Group a drawing task of at least one application interface into at least one  │──202
│  drawing task group based on the grouping result  │
└─────────────────────────────────────────────────────┘
                          │
                          ▼
┌─────────────────────────────────────────────────────┐
│  Process the drawing task in the at least one drawing task group by using at least  │──203
│  one drawing thread to obtain at least one drawing result  │
└─────────────────────────────────────────────────────┘
                          │
                          ▼
┌─────────────────────────────────────────────────────┐
│  Send the at least one drawing result  │──204
└─────────────────────────────────────────────────────┘
```

FIG. 2

## Description

This application claims priority to Chinese Patent Application No. 202310267611.1, filed with the China National Intellectual Property Administration on March 8, 2023 and entitled "RENDERING METHOD AND RELATED DEVICE", which is incorporated herein by reference in its entirety.

## TECHNICAL FIELD

Embodiments of this application relate to the field of electronic devices, and in particular, to a rendering method and a related device.

## BACKGROUND

An electronic device may provide a user interface (User Interface, UI) for implementing interaction with a user. The user interface includes interface elements such as an icon, a window, and a control. The control may include visual interface elements such as a picture, a button, a menu, a tab, a text box, a dialog box, a status bar, and a navigation bar.

Rendering tasks of the user interface are generally processed by using a serial process. When the rendering tasks are heavier, for example, as a size of a terminal screen increases, more interface elements can be presented on the screen, and rendering content increases, processing efficiency of rendering performed by using the serial process is lower. Therefore, how to improve rendering efficiency is urgent.

## SUMMARY

This application provides a rendering method and a related device, to improve rendering efficiency of a to-be-displayed picture frame.

According to a first aspect, a rendering method is provided.

The method includes the following steps: determining a grouping result of a to-be-displayed frame, where the to-be-displayed frame is used to display at least one application interface, and the grouping result is used to group a drawing task of the at least one application interface into at least one drawing task group, so that drawing duration of the to-be-displayed frame is less than or equal to a sum of drawing duration of the at least one application interface; grouping the drawing task of the at least one application interface into the at least one drawing task group based on the grouping result; and processing the drawing task in the at least one drawing task group by using at least one drawing thread to obtain at least one drawing result, where the at least one drawing result is used to obtain an overall drawing result of the to-be-displayed frame through synthesis.

In this solution, the grouping result of the to-be-displayed frame is first determined. The grouping result may enable the drawing duration of the to-be-displayed frame to be less than or equal to the sum of the drawing duration of the at least one application interface, namely, drawing duration required by the to-be-displayed frame when no grouping is performed. Then, a drawing task of the to-be-displayed frame is grouped based on the grouping result to obtain the at least one drawing task group. Finally, the drawing task in the at least one drawing task group is processed by using the at least one drawing thread to obtain the at least one drawing result. The at least one drawing result is used to obtain the overall drawing result of the to-be-displayed frame through synthesis, to render the to-be-displayed frame. It can be learned that, according to the rendering method in this solution, the grouping result of the to-be-displayed frame is predetermined, to implement optimal rendering of the to-be-displayed frame, so that rendering efficiency of the to-be-displayed frame can be effectively improved.

With reference to a possible implementation of the first aspect, the rendering method further includes: sending the at least one drawing result.

It can be learned that in this solution, the at least one drawing result corresponding to the at least one drawing task group is sent to another device or module, so that the another device or module can obtain the overall drawing result of the to-be-displayed frame through synthesis, and finally complete rendering of the to-be-displayed frame.

With reference to a possible implementation of the first aspect, the rendering method further includes: splitting a render tree corresponding to a user interface to obtain at least two space trees, where a status operation remains unchanged before and after a drawing node in each space tree is split, and the status operation is an operation of modifying an attribute of a canvas.

The at least two space trees are used to obtain the user interface through rendering. The user interface is at least one of the at least one application interface.

It can be learned that in this application, the render tree corresponding to the user interface is split to obtain at least two space trees, and it is ensured that the status operation remains unchanged before and after the drawing node in each space tree is split. In this way, when the user interface is obtained through rendering by using the at least two space trees, correct rendering can be implemented, and correctness of a rendering result of the user interface can be ensured.

With reference to a possible implementation of the first aspect, render regions corresponding to the at least two space trees do not overlap. That the render regions do not overlap means that the render regions completely do not overlap. In this way, correctness of the rendering result of the user interface can be further ensured.

With reference to a possible implementation of the first aspect, the splitting a render tree corresponding to a user interface to obtain at least two space trees includes:

determining circumscribed patterns of render regions corresponding to all drawing nodes in the render tree; grouping the circumscribed patterns corresponding to the drawing nodes in the render tree into at least two sets, where a difference between quantities of circumscribed patterns in any two of the at least two sets is less than a first threshold, and/or a difference between sums of areas of circumscribed patterns in any two of the at least two sets is less than a second threshold; and splitting the render tree based on the at least two sets to obtain the at least two space trees.

A space tree corresponding to a set includes a drawing node corresponding to a circumscribed pattern in the set, and a status operation node passed through when backtracking is performed from the drawing node to a root node of the render tree.

The circumscribed pattern refers to a regular pattern and/or a pattern whose area can be calculated, for example, a rectangle, a circle, a square, or a trapezoid. Because shapes of render regions corresponding to the drawing nodes are different, the drawing nodes cannot be accurately grouped. Therefore, the drawing nodes can be accurately grouped by using circumscribed patterns corresponding to the drawing nodes. In addition, when nodes in the render tree are grouped, the drawing node is first grouped, and then the root node of the render tree is backtracked from the drawing node. The status operation node passed through in the backtracking process and the drawing node are classified into a same set. In this way, it can be ensured that the status operation remains unchanged before and after the drawing node is grouped, to ensure that the space tree obtained through splitting can be correctly rendered.

With reference to a possible implementation of the first aspect, render regions corresponding to the at least two sets do not overlap. In this way, correctness of the rendering result of the user interface can be further ensured.

With reference to a possible implementation of the first aspect, the circumscribed pattern of the render region corresponding to the drawing node is a bounding box of the render region corresponding to the drawing node. The circumscribed pattern does not need to be reestablished. Instead, the existing bounding box of the drawing node can be directly used as the circumscribed pattern, to reduce a processing procedure and improve rendering efficiency.

With reference to a possible implementation of the first aspect, at a same moment, one core of a central processing unit CPU in an electronic device executes one drawing thread. One core is responsible for one drawing thread. In this way, highest rendering efficiency can be ensured.

With reference to a possible implementation of the first aspect, the grouping result is a grouping scheme that is of the at least one application interface and whose first value meets a preset condition, and the first value of the grouping scheme is a sum of drawing duration of a longest drawing task group corresponding to the grouping scheme and synthesis duration. The synthesis duration is a product of a quantity of drawing task groups in the grouping scheme and a synthesis overhead.

It can be learned that in this application, the grouping scheme of the at least one application interface is determined, and when the first value of the grouping scheme meets the preset condition, it is determined that the grouping scheme is the grouping result.

With reference to a possible implementation of the first aspect, when there are two drawing task groups in the grouping scheme, the grouping scheme of the at least one application interface includes a first grouping scheme. The first grouping scheme is splitting an application interface sequence into two parts with equal drawing duration, and the application interface sequence is a sequence obtained by arranging the at least one application interface according to a preset order. It can be learned that, a dichotomy scheme may be used as a possible grouping scheme of the at least one application interface.

Optionally, the grouping scheme of the at least one application interface further includes a second grouping scheme and/or a third grouping scheme. The second grouping scheme is moving a dichotomy point to a start point of a drawing task of a first application interface when the dichotomy point is located in a drawing task range of the first application interface. The dichotomy point is a position at which the application interface sequence is split into two parts with equal drawing duration, and the first application interface is one of the at least one application interface.

However, the third grouping scheme is moving the dichotomy point to an end point of the drawing task of the first application interface when the dichotomy point is located in the drawing task range of the first application interface.

It can be learned that, a dichotomy point may be further moved to a start point and/or an end point of a drawing task of an application interface, to obtain a possible grouping scheme of the at least one application interface, thereby avoiding a splitting overhead generated during application interface splitting, and reducing drawing duration of the drawing task group.

With reference to a possible implementation of the first aspect, when there are M drawing task groups in the grouping scheme, and M is greater than or equal to three, the grouping scheme of the at least one application interface includes a fourth grouping scheme. The fourth grouping scheme is splitting an application interface sequence into M parts with equal drawing duration.

Optionally, the grouping scheme of the at least one application interface further includes a fifth grouping scheme. The fifth grouping scheme is: when a first M-division point is located in the drawing task range of the first application interface, fixing positions of M-2 of M-1 M-division points in the application interface sequence, and moving the first M-division point to the start point of the drawing task of the first application interface. The M-1 M-division points are positions at which the application interface sequence is split into M parts with equal drawing duration, and the first M-division point is any one of the M-1 M-division points.

Optionally, the grouping scheme of the at least one application interface further includes a sixth grouping scheme. The sixth grouping scheme is: when the first M-division point is located in the drawing task range of the first application interface, fixing M-2 of M-1 M-division points in the application interface sequence, and moving the first M-division point to the end point of the drawing task of the first application interface.

It can be learned that, when the quantity of drawing task groups in the grouping scheme is M, a method similar to that used when the quantity of drawing task groups in the grouping scheme is two is used, and an M equal division scheme is used as a possible grouping scheme of the at least one application interface. When the first M-division point is located in the drawing task range of the first application interface, the positions of M-2 of M-1 M-division points in the application interface sequence are fixed, and the first M-division point is moved to the start point and/or the end point of the drawing task of the first application interface, so that a possible grouping scheme of the at least one application interface may be obtained.

With reference to a possible implementation of the first aspect, drawing duration of the drawing task group is at least one of the following:

when the drawing task group includes a drawing task of a complete application interface, where "include" herein means "only include", the drawing duration of the drawing task group is a sum of drawing duration of complete application interfaces included in the drawing task group;

when the drawing task group includes a drawing task of an incomplete application interface, where "include" herein means "only include", the drawing duration of the drawing task group is first drawing duration, where the first drawing duration is a sum of splitting duration and a sum of drawing duration of incomplete application interfaces included in the drawing task group, and the splitting duration is a product of a quantity of the incomplete application interfaces and a splitting overhead; and

when the drawing task group includes a drawing task of a complete application interface and a drawing task of an incomplete application interface, where "include" herein means "only include", the drawing duration of the drawing task group is second drawing duration, where the second drawing duration is a sum of the first drawing duration and third drawing duration, and the third drawing duration is a sum of drawing duration of complete application interfaces included in the drawing task group.

With reference to a possible implementation of the first aspect, drawing duration of the complete application interface is any one of the following:

weighted average drawing duration of the application interface, where the weighted average drawing duration is a weighted operation value of fourth drawing duration, fifth drawing duration, and respective weights, the fourth drawing duration is actual measured drawing duration of the application interface in a second frame before the to-be-displayed frame, and the fifth drawing duration is actual measured drawing duration of the application interface in a previous frame of the to-be-displayed frame; and

a total quantity of rendering instructions of the application interface, where the total quantity of rendering instructions is a weighted operation value of a quantity of different types of rendering instructions and weights corresponding to the different types of rendering instructions.

In this application, the weighted average drawing duration of the application interface or the total quantity of rendering instructions of the application interface is used as the drawing duration of the application interface, so that a drawing load size of the application interface can be accurately estimated.

According to a second aspect, this application further provides a rendering method, where the method includes the following step:

splitting a render tree corresponding to a user interface to obtain at least two space trees, where a status operation remains unchanged before and after a drawing node in each space tree is split, and the status operation is an operation of modifying an attribute of a canvas. The at least two space trees are used to render the user interface.

In this application, the user interface is at least one application interface presented to a user on a screen. A render tree corresponding to the user interface is split to obtain at least two space trees, and it is ensured that a status operation remains unchanged before and after a drawing node in each space tree is split. In this way, when the user interface is obtained through rendering by using the at least two space trees, correctness of a rendering result of the user interface can be ensured.

With reference to a possible implementation of the second aspect, render regions corresponding to the at least two space trees do not overlap. That the render regions do not overlap means that the render regions completely do not overlap. In this way, correctness of a rendering result of the user interface can be further ensured.

With reference to a possible implementation of the second aspect, the splitting a render tree corresponding to a user interface to obtain at least two space trees includes:

determining circumscribed patterns of render regions corresponding to all drawing nodes in the render tree; grouping the circumscribed patterns corresponding to the drawing nodes in the render tree into at least two sets, where a difference between quantities of circumscribed patterns in any two of the at least two sets is less than a first threshold, and/or a difference between sums of areas of circumscribed patterns in any two of the at least two sets is less than a second threshold; and splitting the render tree based on the at least two sets to obtain the at least two space trees, where a space tree corresponding to a set includes a drawing node corresponding to a circumscribed pattern in the set, and a status operation node passed through when backtracking is performed from the drawing node to a root node of the render tree.

Because shapes of render regions corresponding to the drawing nodes are different, the drawing nodes cannot be accurately grouped. Therefore, in this application, the drawing nodes can be accurately grouped by using circumscribed patterns corresponding to the drawing nodes. In addition, when nodes in the render tree are grouped, the drawing node is first grouped, and then the root node of the render tree is backtracked from the drawing node. The status operation node passed through in the backtracking process and the drawing node are classified into a same set. In this way, it can be ensured that a status operation remains unchanged before and after the drawing node is grouped, to ensure that the space tree obtained through splitting can be correctly rendered.

With reference to a possible implementation of the second aspect, render regions corresponding to the at least two sets do not overlap. In this way, correctness of a rendering result of the user interface can be further ensured.

With reference to a possible implementation of the second aspect, the circumscribed pattern of the render region corresponding to the drawing node is a bounding box of the render region corresponding to the drawing node. The circumscribed pattern does not need to be re-established. Instead, the existing bounding box of the drawing node can be directly used as the circumscribed pattern, to reduce a processing procedure and improve rendering efficiency.

With reference to a possible implementation of the second aspect, before the splitting a render tree corresponding to a user interface, the rendering method further includes: determining a grouping result of a to-be-displayed frame. The to-be-displayed frame is used to display the at least one application interface. The grouping result is used to group a drawing task of the at least one application interface into at least one drawing task group, so that drawing duration of the to-be-displayed frame is less than or equal to a sum of drawing duration of the at least one application interface.

In this solution, the grouping result of the to-be-displayed frame is first determined. The grouping result may enable the drawing duration of the to-be-displayed frame to be less than or equal to a sum of drawing duration of the at least one application interface, namely, drawing duration required by the to-be-displayed frame when no grouping is performed. When the grouping result indicates that the user interface needs to be split, the splitting method provided in the second aspect is used for splitting.

With reference to a possible implementation of the second aspect, the rendering method further includes: grouping the drawing task of the at least one application interface into the at least one drawing task group based on the grouping result; and processing the drawing task in the at least one drawing task group by using at least one drawing thread to obtain at least one drawing result, where the at least one drawing result is used to obtain an overall drawing result of the to-be-displayed frame through synthesis.

It can be learned that, according to the rendering method in this solution, the grouping result of the to-be-displayed frame is predetermined, to implement optimal rendering of the to-be-displayed frame, so that rendering efficiency of the to-be-displayed frame can be effectively improved. Further, when the grouping result indicates that the user interface needs to be split, after the render tree corresponding to the user interface is split, the drawing task of the at least one application interface is grouped into the at least one drawing task group based on the grouping result, and then the drawing task in the drawing task group is processed by using the drawing thread.

With reference to a possible implementation of the second aspect, the rendering method further includes: sending the at least one drawing result.

With reference to a possible implementation of the second aspect, at a same moment, one core of a central processing unit CPU in an electronic device executes one drawing thread. One core is responsible for one drawing thread. In this way, highest rendering efficiency can be ensured.

With reference to a possible implementation of the second aspect, the grouping result is a grouping scheme that is of the at least one application interface and whose first value meets a preset condition, and the first value of the grouping scheme is a sum of drawing duration of a longest drawing task group corresponding to the grouping scheme and synthesis duration. The synthesis duration is a product of a quantity of drawing task groups in the grouping scheme and a synthesis overhead.

With reference to a possible implementation of the second aspect, when there are two drawing task groups in the grouping scheme, the grouping scheme of the at least one application interface includes a first grouping scheme. The first grouping scheme is splitting an application interface sequence into two parts with equal drawing duration, and the application interface sequence is a sequence obtained by arranging the at least one application interface according to a preset order.

Optionally, the grouping scheme of the at least one application interface further includes a second grouping scheme and/or a third grouping scheme. The second grouping scheme is moving a dichotomy point to a start point of a drawing task of a first application interface when the dichotomy point is located in a drawing task range of the first application interface. The dichotomy point is a position at which the application interface sequence is split into two parts with equal drawing duration, and the first application interface is one of the at least one application interface.

However, the third grouping scheme is moving the dichotomy point to an end point of the drawing task of the first application interface when the dichotomy point is located in the drawing task range of the first application interface.

With reference to a possible implementation of the second aspect, when there are M drawing task groups in the grouping scheme, and M is greater than or equal to three, the grouping scheme of the at least one application interface includes a fourth grouping scheme. The fourth grouping scheme is splitting an application interface sequence into M parts with equal drawing duration.

Optionally, the grouping scheme of the at least one application interface further includes a fifth grouping scheme. The fifth grouping scheme is: when a first M-division point is located in the drawing task range of the first application interface, fixing positions of M-2 of M-1 M-division points in the application interface sequence, and moving the first M-division point to the start point of the drawing task of the first application interface. The M-1 M-division points are positions at which the application interface sequence is split into M parts with equal drawing duration, and the first M-division point is any one of the M-1 M-division points.

Optionally, the grouping scheme of the at least one application interface further includes a sixth grouping scheme. The sixth grouping scheme is: when the first M-division point is located in the drawing task range of the first application interface, fixing M-2 of M-1 M-division points in the application interface sequence, and moving the first M-division point to the end point of the drawing task of the first application interface.

With reference to a possible implementation of the second aspect, drawing duration of the drawing task group is at least one of the following:

when the drawing task group includes a drawing task of a complete application interface, where "include" herein means "only include", the drawing duration of the drawing task group is a sum of drawing duration of complete application interfaces included in the drawing task group;

when the drawing task group includes a drawing task of an incomplete application interface, where "include" herein means "only include", the drawing duration of the drawing task group is first drawing duration, where the first drawing duration is a sum of splitting duration and a sum of drawing duration of incomplete application interfaces included in the drawing task group, and the splitting duration is a product of a quantity of the incomplete application interfaces and a splitting overhead; and

when the drawing task group includes a drawing task of a complete application interface and a drawing task of an incomplete application interface, where "include" herein means "only include", the drawing duration of the drawing task group is second drawing duration, where the second drawing duration is a sum of the first drawing duration and third drawing duration, and the third drawing duration is a sum of drawing duration of complete application interfaces included in the drawing task group.

With reference to a possible implementation of the second aspect, drawing duration of the complete application interface is any one of the following:

weighted average drawing duration of the application interface, where the weighted average drawing duration is a weighted operation value of fourth drawing duration, fifth drawing duration, and respective weights, the fourth drawing duration is actual measured drawing duration of the application interface in a second frame before the to-be-displayed frame, and the fifth drawing duration is actual measured drawing duration of the application interface in a previous frame of the to-be-displayed frame; and

a total quantity of rendering instructions of the application interface, where the total quantity of rendering instruction is a weighted operation value of a quantity of different types of rendering instructions and weights corresponding to the different types of rendering instructions.

According to a third aspect, this application further provides a rendering apparatus. The apparatus includes a determining module, a grouping module, and a processing module.

The determining module is configured to determine a grouping result corresponding to a to-be-displayed frame. The to-be-displayed frame is used to display at least one application interface, and the grouping result is used to group a drawing task of the at least one application interface into at least one drawing task group, so that drawing duration of the to-be-displayed frame is less than or equal to a sum of drawing duration of the at least one application interface.

The grouping module is configured to group the drawing task of the at least one application interface into the at least one drawing task group based on the grouping result.

The processing module is configured to process the at least one drawing task group by using at least one drawing thread to obtain at least one drawing result.

With reference to a possible implementation of the third aspect, the rendering apparatus further includes a sending module.

The sending module is configured to send the at least one drawing result.

With reference to a possible implementation of the third aspect, the rendering apparatus further includes a splitting module.

The splitting module is configured to split a render tree corresponding to a user interface to obtain at least two space trees. A status operation remains unchanged before and after a drawing node in each space tree is split, and the status operation is an operation of modifying an attribute of a canvas. The at least two space trees are used to obtain the user interface through rendering. The user interface is at least one of the at least one application interface.

With reference to a possible implementation of the third aspect, render regions corresponding to the at least two space trees do not overlap.

With reference to a possible implementation of the third aspect, the splitting module is specifically configured to:

determine circumscribed patterns of render regions corresponding to all drawing nodes in the render tree; group the circumscribed patterns corresponding to the drawing nodes in the render tree into at least two sets, where a difference between quantities of circumscribed patterns in any two of the at least two sets is less than a first threshold, and/or a difference between sums of areas of circumscribed patterns in any two of the at least two sets is less than a second threshold; and split the render tree based on the at least two sets to obtain the at least two space trees, where a space tree corresponding to a set includes a drawing node corresponding to a circumscribed pattern in the set, and a status operation node passed through when backtracking is performed from the drawing node to a root node of the render tree.

With reference to a possible implementation of the third aspect, render regions corresponding to the at least two sets do not overlap.

The circumscribed pattern of the render region corresponding to the drawing node is a bounding box of the render region corresponding to the drawing node.

With reference to a possible implementation of the third aspect, at a same moment, one core of a central processing unit CPU in an electronic device executes one drawing thread.

With reference to a possible implementation of the third aspect, the grouping result is a grouping scheme that is of the at least one application interface and whose first value meets a preset condition, and the first value of the grouping scheme is a sum of drawing duration of a longest drawing task group corresponding to the grouping scheme and synthesis duration.

With reference to a possible implementation of the third aspect, when there are two drawing task groups in the grouping scheme, the grouping scheme of the at least one application interface includes a first grouping scheme. The first grouping scheme is splitting an application interface sequence into two parts with equal drawing duration, and the application interface sequence is a sequence obtained by arranging the at least one application interface according to a preset order.

Optionally, the grouping scheme of the at least one application interface further includes a second grouping scheme and/or a third grouping scheme. The second grouping scheme is moving a dichotomy point to a start point of a drawing task of a first application interface when the dichotomy point is located in a drawing task range of the first application interface. The dichotomy point is a position at which the application interface sequence is split into two parts with equal drawing duration, and the first application interface is one of the at least one application interface.

However, the third grouping scheme is moving the dichotomy point to an end point of the drawing task of the first application interface when the dichotomy point is located in the drawing task range of the first application interface.

With reference to a possible implementation of the third aspect, when there are M drawing task groups in the grouping scheme, and M is greater than or equal to three, the grouping scheme of the at least one application interface includes a fourth grouping scheme. The fourth grouping scheme is splitting an application interface sequence into M parts with equal drawing duration.

Optionally, the grouping scheme of the at least one application interface further includes a fifth grouping scheme. The fifth grouping scheme is: when a first M-division point is located in the drawing task range of the first application interface, fixing positions of M-2 of M-1 M-division points in the application interface sequence, and moving the first M-division point to the start point of the drawing task of the first application interface. The M-1 M-division points are positions at which the application interface sequence is split into M parts with equal drawing duration, and the first M-division point is any one of the M-1 M-division points.

Optionally, the grouping scheme of the at least one application interface further includes a sixth grouping scheme. The sixth grouping scheme is: when the first M-division point is located in the drawing task range of the first application interface, fixing M-2 of M-1 M-division points in the application interface sequence, and moving the first M-division point to the end point of the drawing task of the first application interface.

With reference to a possible implementation of the third aspect, drawing duration of the drawing task group is at least one of the following:

when the drawing task group includes a drawing task of a complete application interface, the drawing duration of the drawing task group is a sum of drawing duration of complete application interfaces included in the drawing task group;

when the drawing task group includes a drawing task of an incomplete application interface, the drawing duration of the drawing task group is first drawing duration, where the first drawing duration is a sum of splitting duration and a sum of drawing duration of incomplete application interfaces included in the drawing task group, and the splitting duration is a product of a quantity of the incomplete application interfaces and a splitting overhead; and

when the drawing task group includes a drawing task of a complete application interface and a drawing task of an incomplete application interface, the drawing duration of the drawing task group is second drawing duration, where the second drawing duration is a sum of the first drawing duration and third drawing duration, and the third drawing duration is a sum of drawing duration of complete application interfaces included in the drawing task group.

With reference to a possible implementation of the third aspect, drawing duration of the complete application interface is any one of the following:

weighted average drawing duration of the application interface, where the weighted average drawing duration is a weighted operation value of fourth drawing duration, fifth drawing duration, and respective weights, the fourth drawing duration is actual measured drawing duration of the application interface in a second frame before the to-be-displayed frame, and the fifth drawing duration is actual measured drawing duration of the application interface in a previous frame of the to-be-displayed frame; and a total quantity of rendering instructions of the application interface, where the total quantity of rendering instructions is a weighted operation value of a quantity of different types of rendering instructions and weights corresponding to the different types of rendering instructions.

According to a fourth aspect, this application further provides a rendering apparatus. The apparatus includes a splitting module.

The splitting module is configured to split a render tree corresponding to a user interface to obtain at least two space trees. A status operation remains unchanged before and after a drawing node in each space tree is split, and the status operation is an operation of modifying an attribute of a canvas. The at least two space trees are used to render the user interface. With reference to a possible implementation of the fourth aspect, render regions corresponding to the at least two space trees do not overlap.

With reference to a possible implementation of the fourth aspect, the splitting module is specifically configured to:

determine circumscribed patterns of render regions corresponding to all drawing nodes in the render tree; group the circumscribed patterns corresponding to the drawing nodes in the render tree into at least two sets, where a difference between quantities of circumscribed patterns in any two of the at least two sets is less than a first threshold, and/or a difference between sums of areas of circumscribed patterns in any two of the at least two sets is less than a second threshold; and split the render tree based on the at least two sets to obtain the at least two space trees, where a space tree corresponding to a set includes a drawing node corresponding to a circumscribed pattern in the set, and a status operation node passed through when backtracking is performed from the drawing node to a root node of the render tree.

With reference to a possible implementation of the fourth aspect, render regions corresponding to the at least two sets do not overlap.

With reference to a possible implementation of the fourth aspect, the circumscribed pattern of the render region corresponding to the drawing node is a bounding box of the render region corresponding to the drawing node.

With reference to a possible implementation of the fourth aspect, the rendering apparatus further includes a determining module.

The determining module is configured to determine a grouping result of a to-be-displayed frame. The to-be-displayed frame is used to display at least one application interface. The grouping result is used to group a drawing task of the at least one application interface into at least one drawing task group, so that drawing duration of the to-be-displayed frame is less than or equal to a sum of drawing duration of the at least one application interface.

With reference to a possible implementation of the fourth aspect, the rendering apparatus further includes a grouping module and a processing module.

The grouping module is configured to group the drawing task of the at least one application interface into the at least one drawing task group based on the grouping result.

The processing module is configured to process the drawing task in the at least one drawing task group by using at least one drawing thread to obtain at least one drawing result, where the at least one drawing result is used to obtain an overall drawing result of the to-be-displayed frame through synthesis.

It can be learned that, when the grouping result indicates that the user interface does not need to be split, the grouping module groups the drawing task of the at least one application interface into the at least one drawing task group based on the grouping result, and then the processing module processes the drawing task in the drawing task group by using the drawing thread.

Further, when the grouping result indicates that the user interface needs to be split, after the splitting module splits the render tree corresponding to the user interface, the grouping module groups the drawing task of the at least one application interface into the at least one drawing task group based on the grouping result, and then the processing module processes the drawing task in the drawing task group by using the drawing thread.

With reference to a possible implementation of the fourth aspect, the rendering apparatus further includes a sending module.

The sending module is configured to send the at least one drawing result.

With reference to a possible implementation of the fourth aspect, at a same moment, one core of a central processing unit CPU in an electronic device executes one drawing thread.

With reference to a possible implementation of the fourth aspect, the grouping result is a grouping scheme that is of the at least one application interface and whose first value meets a preset condition, and the first value of the grouping scheme is a sum of drawing duration of a longest drawing task group corresponding to the grouping scheme and synthesis duration. The synthesis duration is a product of a quantity of drawing task groups in the grouping scheme and a synthesis overhead.

With reference to a possible implementation of the fourth aspect, when there are two drawing task groups in the grouping scheme, the grouping scheme of the at least one application interface includes a first grouping scheme. The first grouping scheme is splitting an application interface sequence into two parts with equal drawing duration, and the application interface sequence is a sequence obtained by arranging the at least one application interface according to a preset order.

Optionally, the grouping scheme of the at least one application interface further includes a second grouping scheme and/or a third grouping scheme. The second grouping scheme is moving a dichotomy point to a start point of a drawing task of a first application interface when the dichotomy point is located in a drawing task range of the first application interface. The dichotomy point is a position at which the application interface sequence is split into two parts with equal drawing duration, and the first application interface is one of the at least one application interface.

However, the third grouping scheme is moving the dichotomy point to an end point of the drawing task of the first application interface when the dichotomy point is located in the drawing task range of the first application interface.

With reference to a possible implementation of the fourth aspect, when there are M drawing task groups in the grouping scheme, and M is greater than or equal to three, the grouping scheme of the at least one application interface includes a fourth grouping scheme. The fourth grouping scheme is splitting an application interface sequence into M parts with equal drawing duration.

Optionally, the grouping scheme of the at least one application interface further includes a fifth grouping scheme. The fifth grouping scheme is: when a first M-division point is located in the drawing task range of the first application interface, fixing positions of M-2 of M-1 M-division points in the application interface sequence, and moving the first M-division point to the start point of the drawing task of the first application interface. The M-1 M-division points are positions at which the application interface sequence is split into M parts with equal drawing duration, and the first M-division point is any one of the M-1 M-division points.

Optionally, the grouping scheme of the at least one application interface further includes a sixth grouping scheme. The sixth grouping scheme is: when the first M-division point is located in the drawing task range of the first application interface, fixing M-2 of M-1 M-division points in the application interface sequence, and moving the first M-division point to the end point of the drawing task of the first application interface.

With reference to a possible implementation of the fourth aspect, drawing duration of the drawing task group is at least one of the following:

when the drawing task group includes a drawing task of a complete application interface, where "include" herein means "only include", the drawing duration of the drawing task group is a sum of drawing duration of complete application interfaces included in the drawing task group;
when the drawing task group includes a drawing task of an incomplete application interface, where "include" herein means "only include", the drawing duration of the drawing task group is first drawing duration, where the first drawing duration is a sum of splitting duration and a sum of drawing duration of incomplete application interfaces included in the drawing task group, and the splitting duration is a product of a quantity of the incomplete application interfaces and a splitting overhead; and
when the drawing task group includes a drawing task of a complete application interface and a drawing task of an incomplete application interface, where "include" herein means "only include", the drawing duration of the drawing task group is second drawing duration, where the second drawing duration is a sum of the first drawing duration and third drawing duration, and the third drawing duration is a sum of drawing duration of complete application interfaces included in the drawing task group.

With reference to a possible implementation of the fourth aspect, drawing duration of the complete application interface is any one of the following:

weighted average drawing duration of the application interface, where the weighted average drawing duration is a weighted operation value of fourth drawing duration, fifth drawing duration, and respective weights, the fourth drawing duration is actual measured drawing duration of the application interface in a second frame before the to-be-displayed frame, and the fifth drawing duration is actual measured drawing duration of the application interface in a previous frame of the to-be-displayed frame; and a total quantity of rendering instructions of the application interface, where the total quantity of rendering instructions is a weighted operation value of a quantity of different types of rendering instructions and weights corresponding to the different types of rendering instructions.

According to a fifth aspect, this application further provides an electronic device, including a processor and a memory, where the processor is connected to the memory, the memory is configured to store program code, and the processor is configured to invoke the program code to perform the rendering method according to any one of the first aspect or the second aspect.

According to a sixth aspect, this application further provides a computer-readable storage medium. The computer-readable storage medium stores a computer program. When the computer program is executed by a processor, the rendering method according to any one of the first aspect or the second aspect is implemented.

According to a seventh aspect, this application further provides a computer program product. When the computer program product runs on a computer, the computer is enabled to perform the rendering method according to any one of the first aspect or the second aspect.

According to an eighth aspect, this application further provides a chip. The chip includes a processor and a data interface, and the processor reads, through the data interface, instructions stored in a memory, to perform the method according to the first aspect or the second aspect.

Optionally, in an implementation, the chip may further include the memory, the memory stores the instructions, the processor is configured to execute the instructions stored in the memory, and when the instructions are executed, the processor is configured to perform the method according to the first aspect or the second aspect.

**BRIEF DESCRIPTION OF DRAWINGS**

The following describes the accompanying drawings used in embodiments of this application.

FIG. 1 is a diagram of an application architecture of a rendering method according to an embodiment of this application;
FIG. 2 is a schematic flowchart of a rendering method according to an embodiment of this application;
FIG. 3A is a diagram of a process of determining a splitting scheme according to an embodiment of this application;
FIG. 3B is a diagram of another process of determining a splitting scheme according to an embodiment of this application;
FIG. 3C is a diagram of calculating duration of a drawing task group according to an embodiment of this application;
FIG. 4A is a schematic flowchart of a rendering method according to an embodiment of this application;
FIG. 4B is a diagram of single-thread single-frame drawing according to an embodiment of this application;
FIG. 4C is a diagram of multi-thread drawing according to an embodiment of this application;
FIG. 5 is a schematic flowchart of another rendering method according to an embodiment of this application;
FIG. 6A is a diagram of a render tree according to an embodiment of this application;
FIG. 6B is a diagram of a bounding box of a drawing node according to an embodiment of this application;
FIG. 6C is a diagram of grouping a rectangle according to an embodiment of this application;
FIG. 6D is a diagram of marking a render tree according to an embodiment of this application;
FIG. 6E is a diagram of a space tree and a rendering result thereof according to an embodiment of this application;
FIG. 6F is a diagram of a thread allocation of an application interface according to an embodiment of this application;
FIG. 6G is a diagram of another thread allocation of an application interface according to an embodiment of this application;
FIG. 7 is a schematic flowchart of a rendering apparatus according to an embodiment of this application;
FIG. 8 is a diagram of a structure of another rendering apparatus according to an embodiment of this application; and
FIG. 9 is a diagram of a structure of an electronic device according to an embodiment of this application.

**DESCRIPTION OF EMBODIMENTS**

The following describes technical solutions of this application with reference to accompanying drawings.

In embodiments of this application, terms such as "example" or "for example" represent giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

In embodiments of this application, "at least one" means one or more, and "a plurality of" means two or more. "At least one item (piece) of the following" or a similar expression thereof indicates any combination of these items, including a singular item (piece) or any combination of plural items (pieces). For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. Sequence numbers of steps (for example, step S1 and step S21) in embodiments of this application are merely used to distinguish between different steps, and do not limit an execution sequence of the steps.

In addition, unless otherwise specified, ordinal numbers such as "first" and "second" in embodiments of this application are used to distinguish between a plurality of objects, but are not intended to limit an order, a time sequence, priorities, or degrees of importance of the plurality of objects. For example, a first device and a second device are merely for ease of description, and do not indicate a difference of the first device and the second device in terms of a structure and a degree of importance. In some embodiments, the first device and the second device may alternatively be the same device.

As used in embodiments of this application, according to the context, the term "when" may be interpreted as a meaning of "if", "after", "in response to determining", or "in response to detecting". The foregoing descriptions are merely optional embodiments of this application, but are not intended to limit this application. Any modification, equivalent replacement, improvement, or the like made without departing from the concept and principle of this application shall fall within the protection scope of this application.

Embodiments of this application relate to an application. Therefore, for ease of understanding, the following first describes related concepts such as related terms in embodiments of this application.

(1) Rendering pipeline

The rendering pipeline, which is also referred to as a rendering pipeline, is a variety of operation processes that need to be performed on a graphic image step by step to form a final output picture from data. Generally, the rendering pipeline includes: vertex data input, vertex shader, surface subdivision process, geometric shader, diagram element assembly, cropping and removal, rasterization, fragment shader, and hybrid test.

(2) Rendering frame rate

The rendering frame rate refers to frames per second (Frames Per Second, FPS), namely, a quantity of times (or a rate) that a bitmap image in a unit of frame consecutively appears on a display per second, and in short, a quantity of pictures displayed on a screen in one second.

(3) Canvas

The canvas is a core class provided by a rendering engine, encapsulates all drawing operations performed on a device, and records a drawing status of a management device. A rendering texture can be drawn or a status can be changed by invoking a canvas rendering interface.

(4) Render tree

A user interface (User Interface, UI) is at least one application interface presented to a user on a screen. The render tree is used for layout and drawing of the user interface, is responsible for real rendering, and stores information such as a size and a layout of an element. The render tree includes a plurality of render nodes, each render node includes layout information of the node and recorded drawing operation information (DrawOp), the layout information includes a position, a size (for example, a width and a height), and a bounding box of the render node, and the bounding box is a circumscribed rectangle of a drawing region (or render region) corresponding to the render node. The drawing operation information refers to content that needs to be drawn by the render node, and includes but is not limited to at least one of the following: graph drawing, text character drawing, picture drawing, canvas clipping (Clip), canvas transformation (Transform), canvas movement (Move), and canvas transparency modification.

The render node is configured to perform a drawing operation and/or a status operation. The drawing operation may be understood as a rendering operation, and includes but is not limited to at least one of the following: graph drawing, text character drawing, and picture drawing.

The status operation may be understood as an operation of modifying an attribute of the canvas (for example, a size, a position, and transparency of the canvas), and includes but is not limited to at least one of the following: canvas clipping, canvas transformation, canvas movement, and canvas transparency modification.

In embodiments of this application, a drawing node is a render node that is in the render tree and that is configured to perform the drawing operation, and a status operation node is a render node that is in the render tree and that is configured to perform the status operation. For example, the drawing node and the status operation node may be a same render node, that is, the render node is configured to perform the drawing operation and the status operation.

(5) Buffer queue (Buffer Queue)

The buffer queue is configured to connect a party (producer) that generates a graphics data buffer to a party (consumer) that receives the data for display or further processing.

(6) UI control

The UI control is a component that a user can interact with or operate, for example, a button or an input box.

(7) Render space tree (space tree for short)

The space tree is a tree structure formed by render nodes (namely, drawing nodes and/or status operation nodes) corresponding to UI controls in a render region, and mainly indicates a relationship between the UI controls in space. Optionally, different space trees do not intersect spatially. In other words, render regions corresponding to different space trees completely do not overlap.

(8) Window

The window is a graphical interface element used to display content of an application for a user to view and interact with. The window is usually a rectangular region, can be resized, and usually can be edited based on a function and a restriction imposed by an application that provides the window.

(9) Z-order

The Z-order refers to a Z-axis order of a window. A Z-order of a window indicates a position of the window in a stacked window list, or may be understood as a Z-axis order of an application interface. A window stacking direction extends outward from a screen along an imaginary axis, namely, a Z axis.
Rendering tasks of a user interface are generally processed by using a serial process. When the rendering tasks are heavier, processing efficiency of the serial process is lower. For example, when a quantity of application interfaces included in the user interface increases, rendering tasks are heavier. In this case, processing efficiency of the serial process is not ideal. Therefore, how to improve rendering efficiency is urgent.
This application provides a rendering method for this purpose. A grouping result of a to-be-displayed picture frame (namely, a to-be-displayed frame) is first determined. Then, a drawing task of the to-be-displayed frame is processed based on the grouping result to obtain at least one drawing task group. Finally, the drawing task in the at least one drawing task group is processed by using at least one drawing thread to obtain at least one drawing result, and the at least one drawing result is synthesized to obtain an overall drawing result of the to-be-displayed frame. The to-be-displayed frame is used to display at least one application interface. Because the grouping result may enable drawing duration of the to-be-displayed frame to be less than a sum of drawing duration of the at least one application interface, namely, drawing duration required by the to-be-displayed frame when no grouping is performed, the rendering method in this application is used, so that rendering efficiency of the to-be-displayed frame can be effectively improved.
In addition, when the grouping result indicates that the user interface needs to be split, the user interface may be split by using another rendering method provided in this application. The user interface is at least one of the at least one application interface. Certainly, the user interface may alternatively be understood as at least one application interface presented to a user on a screen, and the rendering method in this application is also applicable. In embodiments of this application, when the user interface is split, a render tree corresponding to the user interface is split to obtain at least two space trees, and it is ensured that a status operation remains unchanged before and after a drawing node in each space tree is split. In this way, when the user interface is obtained through rendering by using the at least two space trees, correctness of a rendering result of the user interface can be ensured.
The following describes an application architecture of a rendering method in this application.

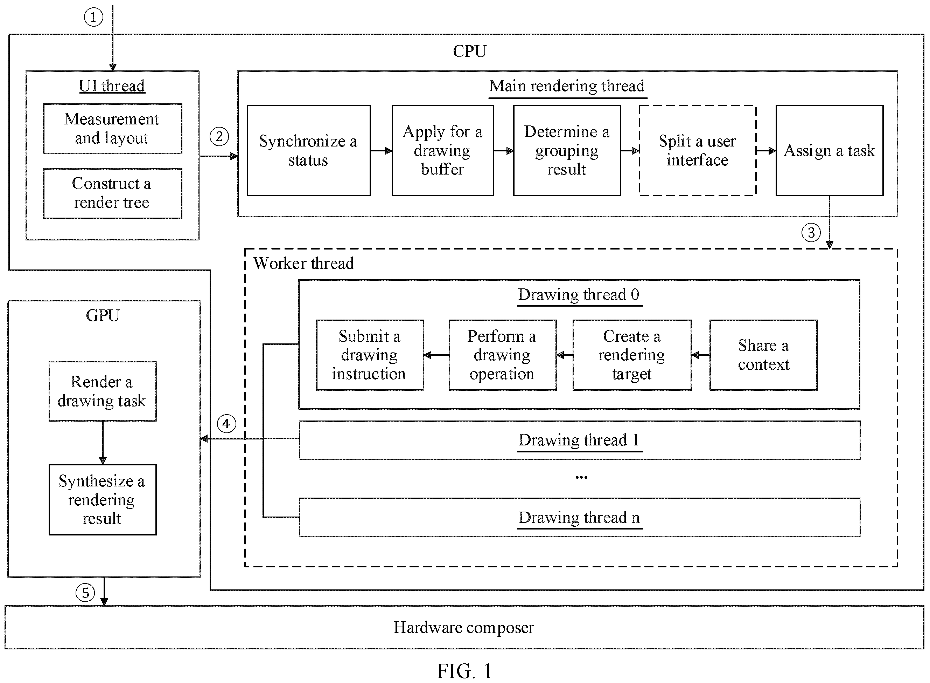

FIG. 1 is a diagram of an application architecture of a rendering method according to an embodiment of this application. Information represented by numbers in FIG. 1 is as follows:

①　is a drawing content update message;
②　is a display list;
③　is a drawing task group;
④　is a drawing instruction for a graphics processing unit (Graphics Processing Unit, GPU); and
⑤　is a buffer (Buffer) of an overall drawing result.

The rendering method in embodiments of this application may be applied to an electronic device. Refer to FIG. 1. The electronic device includes a central processing unit (Central Processing Unit, CPU) and a GPU. The rendering method in this application is mainly performed on a CPU side, the CPU is responsible for preparing data, and the GPU performs rendering.
The following specifically describes a process of performing rendering by using the application architecture in FIG. 1.

1. When content drawn on a screen of the electronic device needs to be updated, the drawing content update message is sent to the CPU to trigger a UI thread.

2. The UI thread completes measurement and layout of a control, and constructs a render tree based on control information. The render tree includes several render nodes, and each render node includes a display list. The display list is used to store several pieces of drawing operation information that needs to be processed. Then, the UI thread sends a synchronization (Sync) signal to a main rendering thread to trigger the main rendering thread to synchronize a status with the UI thread, including synchronizing a display list. In addition, the UI thread synchronizes node attribute information (such as a size and a position of a node) with the main rendering thread.

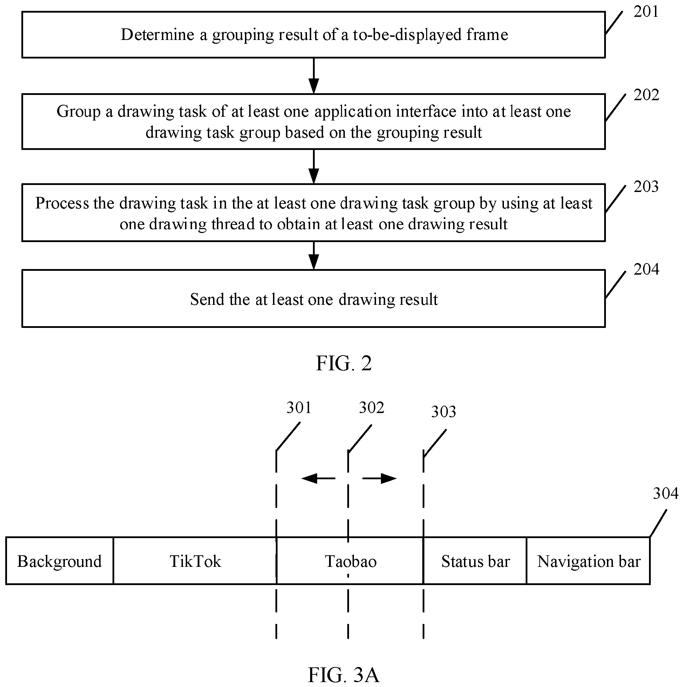

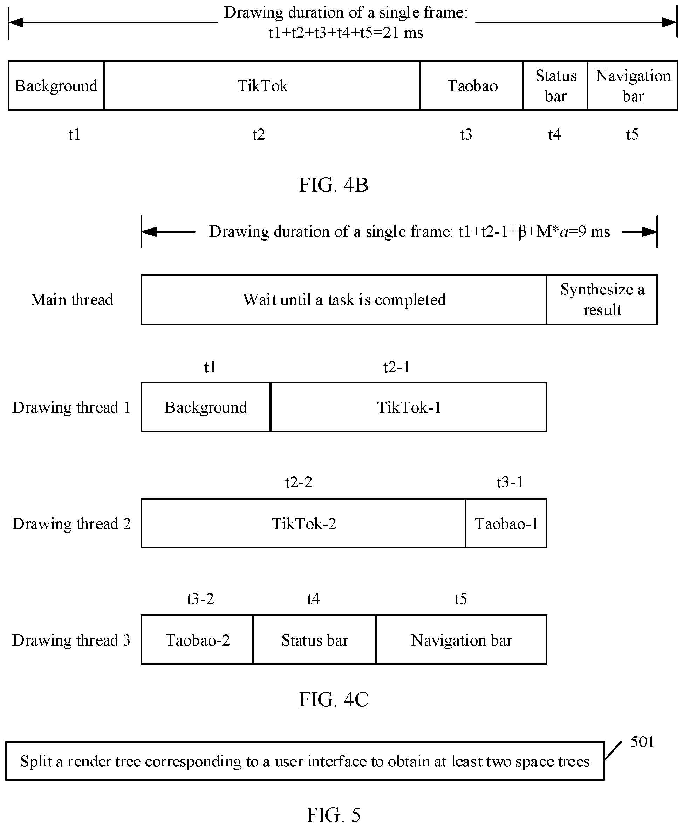

3. The main rendering thread applies for a drawing buffer for a current to-be-displayed frame, determines a grouping result of a drawing task of the to-be-displayed frame (for details, refer to related descriptions in FIG. 2 to FIG. 4C), and then processes the drawing task of the to-be-displayed frame based on the grouping result. When the grouping result of the to-be-displayed frame indicates that a user interface needs to be split, the user interface is split (for details, refer to related descriptions in FIG. 5 to FIG. 6G). Then, the drawing task of the to-be-displayed frame is grouped based on the grouping result to obtain at least one drawing task group, and finally the at least one drawing task group is sent to a worker thread.

4. After receiving the at least one drawing task group, the worker thread creates a required resource for each of the at least one drawing thread, including applying for a drawing buffer. Each drawing thread has an independent GPU rendering pipeline (for example, "sharing a context", "creating a rendering target", "executing a drawing operation", and "submitting a drawing instruction" in FIG. 1, where creating a context and rendering target do not need to be re-performed every frame, and content may be cleared only). The worker thread allocates the drawing task in the at least one drawing task group to the at least one drawing thread for processing, to obtain at least one drawing result, namely, a GPU instruction. One drawing thread processes a drawing task in one drawing task group. Each drawing thread converts a CPU instruction into a GPU instruction, and then submits the GPU instruction to the GPU for processing.

5. After receiving the GPU instruction, the GPU starts to perform rendering work, that is, calculates and fills a correct color for a corresponding pixel. Because each drawing thread is submitted to a separate drawing buffer, the GPU further needs to synthesize drawing results of drawing buffers to obtain an overall drawing result, and finally submits a buffer of the overall drawing result to a hardware synthesizer.

6. After the GPU completes rendering, the hardware synthesizer sends the overall drawing result to the screen for display.

The following specifically describes the rendering method provided in embodiments of this application.

FIG. 2 is a schematic flowchart of a rendering method according to an embodiment of this application. The rendering method includes the following steps.

201: Determine a grouping result of a to-be-displayed frame.

Specifically, the to-be-displayed frame is a to-be-displayed picture frame. The to-be-displayed frame is used to display at least one application interface. The grouping result is used to group a drawing task of the at least one application interface into at least one drawing task group, so that drawing duration of the to-be-displayed frame is less than or equal to a sum of drawing duration of the at least one application interface.

202: Group the drawing task of the at least one application interface into the at least one drawing task group based on the grouping result.

Specifically, when the grouping result indicates that a user interface needs to be split, the user interface is an interface formed by at least one of the at least one application interface. The user interface may be split by using a method shown in FIG. 5. Details are not described herein. Then, a drawing task corresponding to a space tree obtained through splitting is grouped into a corresponding drawing task group based on the grouping result. In addition, when the grouping result indicates that an application interface does not need to be split, the drawing task of the at least one application interface is grouped based on the grouping result. When the grouping result indicates that the drawing task of the at least one application interface does not need to be split, the drawing task of the at least one application interface is used as one drawing task group.

203: Process the drawing task in the at least one drawing task group by using at least one drawing thread to obtain at least one drawing result, where the at least one drawing result is used to obtain an overall drawing result of the to-be-displayed frame through synthesis.

In this embodiment of this application, the grouping result of the to-be-displayed frame is first determined. The grouping result may enable the drawing duration of the to-be-displayed frame to be less than the sum of the drawing duration of the at least one application interface, namely, drawing duration required by the to-be-displayed frame when no grouping is performed. Then, a drawing task of the to-be-displayed frame is grouped based on the grouping result to obtain the at least one drawing task group. Finally, the drawing task in the at least one drawing task group is processed by using the at least one drawing thread to obtain the at least one drawing result. The at least one drawing result is used to obtain the overall drawing result of the to-be-displayed frame through synthesis, to render the to-be-displayed frame. It can be learned that, according to the rendering method in this embodiment of this application, the grouping result of the to-be-displayed frame is predetermined, to implement optimal rendering of the to-be-displayed frame, so that rendering efficiency of the to-be-displayed frame can be effectively improved.

For example, in this embodiment of this application, rendering tasks of the to-be-displayed frame in different cases are determined, to determine corresponding grouping results, so that rendering efficiency of the to-be-displayed frame is optimal. For example, when there are heavy rendering tasks, the grouping result may be grouping the rendering tasks into two or more groups; or when there are light rendering tasks, the rendering tasks may not be grouped. An actual grouping result is determined based on an actual situation of a rendering task of the to-be-displayed frame.

Refer to FIG. 2. In a possible implementation, the rendering method further includes the following step:

204: Send the at least one drawing result.

In this embodiment of this application, the at least one drawing result corresponding to the at least one drawing task group is sent to another device or module, so that the another device or module can obtain the overall drawing result of the to-be-displayed frame through synthesis, and finally complete rendering of the to-be-displayed frame. For example, a CPU performs step 204, and the CPU sends the at least one drawing result to a GPU, so that the GPU obtains the overall drawing result of the to-be-displayed frame through synthesis based on the at least one drawing result.

In a possible implementation, in this embodiment of this application, at a same moment, one core of the CPU in an electronic device executes the at least one drawing thread.

In a possible implementation, in this embodiment of this application, at a same moment, one core of the CPU in the electronic device executes one drawing thread. One core is responsible for one drawing thread. In this way, highest rendering efficiency of the to-be-displayed frame can be ensured. In addition, when the electronic device has two or more cores, according to the method in this embodiment of this application, drawing content of the to-be-displayed frame is appropriately grouped, so that a multi-core capability of the electronic device can be fully utilized, energy efficiency of hardware can be maximized, and a problem of uneven rendering loads is avoided.

For example, when the electronic device has two or more cores, in this embodiment of this application, at a same moment, a quantity of drawing threads that execute a task is less than or equal to a quantity of cores of the CPU in the electronic device, and may be set based on an actual situation.

In a possible implementation, the grouping result is a grouping scheme that is of the at least one application interface and whose first value meets a preset condition, and the first value of the grouping scheme is a sum of drawing duration of a longest drawing task group corresponding to the grouping scheme and synthesis duration. The synthesis duration is a product of a quantity of drawing task groups in the grouping scheme and a synthesis overhead.

The grouping scheme is to group the drawing task of the at least one application interface into the at least one drawing task group. In this embodiment of this application, the grouping scheme of the at least one application interface is determined, and when the first value of the grouping scheme meets the preset condition, the grouping scheme is determined as the grouping result.

For example, at least one grouping scheme of the at least one application interface may be first determined, and then a grouping scheme whose first value meets the preset condition in the at least one grouping scheme is determined as the grouping result of the at least one application interface. In this embodiment of this application, a corresponding preset condition may be set based on an actual situation. This is not particularly limited. For example, the preset condition is that the first value is the smallest, so that drawing duration of a single frame is the shortest.

Specifically, drawing duration of each frame is mainly affected by a window load, and the window load is drawing duration of each application interface. More application interfaces that need to be drawn indicate greater total loads of all windows and longer drawing time of a single frame. In addition, the drawing duration of each frame is further mainly affected by a quantity of GPU syntheses (namely, a quantity M of drawing task groups of the to-be-displayed frame). Each synthesis causes a specific synthesis overhead $\alpha$, where $\alpha$ is an empirical value, is generally related to a size of a synthesis buffer and computing power of the device, and can be obtained through an actual test. Therefore, in this embodiment, an appropriate quantity of GPU syntheses needs to be calculated. A plurality of drawing task groups are drawn in parallel. Therefore, the drawing duration of each frame is mainly affected by a longest drawing task group (with longest drawing time). Further, when drawing duration of the longest drawing task group is the shortest, drawing duration of a single frame is also the shortest. In other words, in this embodiment of this application, grouping of a drawing task is determined based on a time budget, a constraint on a quantity of syntheses, and a maximum quantity of threads of the device.

As an optimization, a plurality of drawing task groups need to be executed at the same time to a maximum extent. Because in a drawing periodicity, each CPU core may independently execute a drawing operation of one drawing task group at a same moment, a maximum value of the quantity of GPU syntheses needs to be equal to a quantity m of CPU cores in the electronic device, to perform drawing operations in parallel to a maximum extent. When duration of the longest drawing task group is the shortest, the drawing duration of a single frame is the shortest, and a drawing frame rate is the highest. $T_j$ indicates drawing duration of a $j^{th}$ drawing task group.

In this embodiment of this application, the first value D is set as follows:

$$D = T_{max} + M * \alpha \ (1).$$

Herein, $T_{max} = \max(T)$, $T_j \in T$, $1 \leq j \leq m$, and $T_{max}$ indicates the drawing duration of the longest drawing task group in the grouping scheme.

In this embodiment of this application, at least one possible grouping scheme of the at least one application interface may be first obtained, then a first value of each grouping scheme is calculated according to Formula (1), and a grouping scheme with a smallest first value is used as the grouping result of the at least one application interface, so that the drawing duration of the to-be-displayed frame is less than the sum of the drawing duration of the at least one application interface.

In a possible implementation, when there are two drawing task groups in the grouping scheme, the grouping scheme of the at least one application interface includes a first grouping scheme. The first grouping scheme is splitting an application interface sequence into two parts with equal drawing duration, and the application interface sequence is a sequence obtained by arranging the at least one application interface according to a preset order. In this embodiment of this application, a dichotomy scheme may be used as a possible grouping scheme of the at least one application interface.

The preset order may be determined based on an actual situation. For example, the application interface sequence is obtained by performing arranging in an ascending Z-order. Alternatively, the preset order may be a descending Z-order. An order of the application interface sequence is not particularly limited. In addition, because a drawing order of application interfaces needs to be the ascending Z-order, in a GPU synthesis phase, the application interfaces need to be sequentially synthesized in the ascending Z-order, to ensure correctness of a drawing result.

Optionally, the grouping scheme of the at least one application interface further includes a second grouping scheme and/or a third grouping scheme. The second grouping scheme is moving a dichotomy point to a start point of a drawing task of a first application interface when the dichotomy point is located in a drawing task range of the first application interface. The dichotomy point is a position at which the application interface sequence is split into two parts with equal drawing duration, and the first application interface is one of the at least one application interface.

However, the third grouping scheme is moving the dichotomy point to an end point of the drawing task of the first application interface when the dichotomy point is located in the drawing task range of the first application interface.

In this embodiment of this application, a dichotomy point may be further moved to a start point and/or an end point of a drawing task of an application interface, to obtain a possible grouping scheme of the at least one application interface, thereby avoiding a splitting overhead generated during application interface splitting, and reducing drawing duration of the drawing task group.

In a possible implementation, when there are M drawing task groups in the grouping scheme, and M is greater than or equal to three, the grouping scheme of the at least one application interface includes a fourth grouping scheme. The fourth grouping scheme is splitting an application interface sequence into M parts with equal drawing duration.

Optionally, the grouping scheme of the at least one application interface further includes a fifth grouping scheme. The fifth grouping scheme is: when a first M-division point is located in the drawing task range of the first application interface, fixing positions of M-2 of M-1 M-division points in the application interface sequence, and moving the first M-division point to the start point of the drawing task of the first application interface. The M-1 M-division points are positions at which the application interface sequence is split into M parts with equal drawing duration, and the first M-division point is any one of the M-1 M-division points.

Optionally, the grouping scheme of the at least one application interface further includes a sixth grouping scheme. The sixth grouping scheme is: when the first M-division point is located in the drawing task range of the first application interface, fixing M-2 of M-1 M-division points in the application interface sequence, and moving the first M-division point to the end point of the drawing task of the first application interface.

In this embodiment of this application, when the quantity of drawing task groups in the grouping scheme is M, a method similar to that used when the quantity of drawing task groups in the grouping scheme is two is used, and an M equal division scheme is used as a possible grouping scheme of the at least one application interface. When the first M-division point is located in the drawing task range of the first application interface, the positions of M-2 of M-1 M-division points in the application interface sequence are fixed, and the first M-division point is moved to the start point and/or the end point of the drawing task of the first application interface, so that a possible grouping scheme of the at least one application interface may be obtained.

For example, a possible grouping scheme of the at least one application interface may be further determined by using a manual grouping method and the like. The method for grouping the at least one application interface is not limited.

The following specifically describes a method for obtaining the at least one possible grouping scheme of the at least one application interface.

A quantity M of drawing task groups of the to-be-displayed frame is first determined, where the quantity M ranges from 1 to m, and m is a quantity of cores of a central processing unit CPU of the electronic device, namely, a maximum quantity of GPU syntheses supported by the electronic device.

At least one splitting scheme corresponding to the application interface sequence is determined for each quantity M. In this case, Y splitting schemes corresponding to m quantities M may be obtained, where Y is greater than or equal to m. In each splitting scheme, the application interface sequence is split into at least one part, and each part corresponds to one drawing task group. A splitting scheme corresponding to the quantity M is a possible grouping scheme of the at least one application interface.

A first value corresponding to each splitting scheme is determined according to Formula (1), and a splitting scheme with a smallest first value in the Y splitting schemes and a corresponding quantity M are determined as a grouping result. The first value of the splitting scheme is a sum of drawing duration of a longest drawing task group corresponding to the splitting scheme and synthesis duration, and the synthesis duration is a product of the quantity M and a synthesis overhead.

In this embodiment of this application, the at least one splitting scheme corresponding to each quantity M is determined, and then the splitting scheme with the smallest first value is determined from the Y splitting schemes. The splitting scheme with the smallest first value and the corresponding quantity M are used as the grouping result, so that accuracy of the grouping result can be ensured.

For example, it is assumed that at least one splitting scheme corresponding to each quantity M is determined. The following provides a possible solution of determining the foregoing three splitting schemes. First, an example in which three corresponding splitting schemes are determined when the quantity M is 2 is used. FIG. 3A is a diagram of a process of determining a splitting scheme according to an embodiment of this application. For example, an application interface sequence 304 is in an order of a background application, a TikTok application, a Taobao application, a status bar application, and a navigation bar application. A dichotomy point 302 of the application interface sequence 304 is first determined, the dichotomy point 302 is located in a drawing task range of the Taobao application, and a splitting scheme corresponding to the dichotomy point 302 is used as a splitting scheme of the application interface sequence 304. Then, the dichotomy point 302 is moved leftward to a start point 301 of a drawing task of the Taobao application, and a splitting scheme corresponding to the start point 301 is used as a splitting scheme of the application interface sequence 304. Similarly, the dichotomy point 302 is moved rightward to an end point 303 of the drawing task of the Taobao application, and a splitting scheme corresponding to the end point 303 is used as a splitting scheme of the application interface sequence 304. In this case, when the quantity M is 2, three splitting schemes corresponding to the application interface sequence 304 may be determined. In addition, when the dichotomy point 302 overlaps the start point 301 or the end point 303, there are two corresponding splitting schemes when the quantity M is 2.

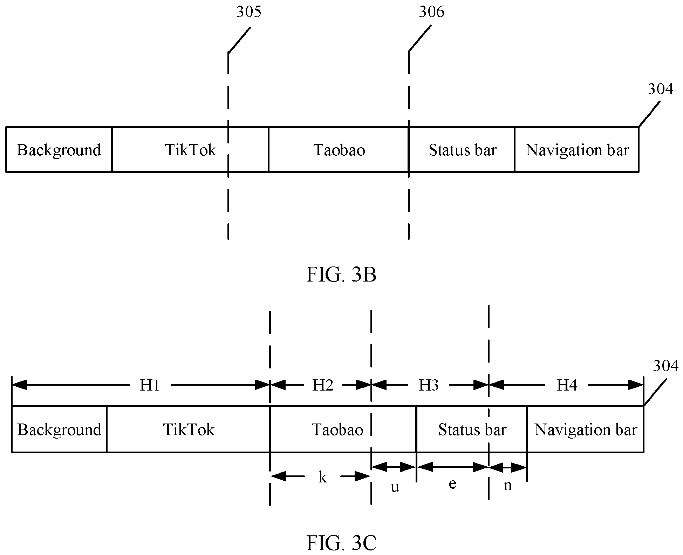

FIG. 3B is a diagram of another process of determining a splitting scheme according to an embodiment of this application. An example in which the quantity M is 3 is used. Similarly, three-division points 305 and 306 are first determined, and a splitting scheme corresponding to the three-division points 305 and 306 is used as a splitting scheme of the application interface sequence 304. Then, a position of the three-division point 306 is fixed, and the three-division point 305 is moved leftward and rightward in a part from a start point of the application interface sequence 304 to the three-division point 306 according to the method in FIG. 3A to reach a start point and an end point of a drawing task of the TikTok application. A splitting scheme corresponding to the three-division point 306 and the start point of the drawing task of the TikTok application is used as a splitting scheme of the application interface sequence 304, and a splitting scheme corresponding to the three-division point 306 and the end point of the drawing task of the TikTok application is used as a splitting scheme of the application interface sequence 304. Similarly, a position of the three-division point 305 is fixed, and the three-division point 306 is moved leftward and rightward in a part from the three-division point 305 to an end point of the application interface sequence 304 according to the method in FIG. 3A to reach a start point and an end point of a drawing task of the status bar application. A splitting scheme corresponding to the three-division point 305 and the start point of the drawing task of the status bar application is used as a splitting scheme of the application interface sequence 304, and a splitting scheme corresponding to the three-division point 305 and the end point of the drawing task of the status bar application is used as a splitting scheme of the application interface sequence 304.

When the quantity M is greater than 3, a method for determining the splitting scheme is the same as the method for determining the splitting scheme when the quantity M is 3. Details are not described again. A difference lies in that M-division points need to be determined, positions of M-2 M-division points are fixed, and a remaining M-division point is moved leftward and rightward sequentially to boundary points of an application interface (namely, a start point and an end point of a drawing task of the application interface).

In a possible implementation, when the drawing task group includes a drawing task of a complete application interface, where "include" herein means "only include", drawing duration of the drawing task group is a sum of drawing duration of complete application interfaces included in the drawing task group.

Specifically, when front and rear splitting points of one drawing task group are both located on a boundary of an application interface, refer to FIG. 3C. FIG. 3C is a diagram of calculating duration of a drawing task group according to an embodiment of this application. For example, the application interface sequence 304 is in an order of the background application, the TikTok application, the Taobao application, the status bar application, and the navigation bar application. A drawing task group H1 includes drawing tasks of two complete application interfaces: the background application and the TikTok application. In this case, the drawing duration of the drawing task group is determined according to Formula (2):

$$T_j = \sum_p^q \hat{t}_i \quad (2).$$

Herein, $t_p$ to $t_q$ indicate drawing duration correspondingly required by the complete application interfaces included in the drawing task group.

For example, refer to FIG. 3C. Drawing duration of the drawing task group H1 is a sum of drawing duration required by the background application and drawing duration required by the TikTok application.

In a possible implementation, when the drawing task group includes a drawing task of an incomplete application interface, where "include" herein means "only include", drawing duration of the drawing task group is first drawing duration, where the first drawing duration is a sum of splitting duration and a sum of drawing duration of incomplete application interfaces included in the drawing task group, and the splitting duration is a product of a quantity of the incomplete application interfaces and a splitting overhead.

Specifically, when front and rear splitting points of one drawing task group are both located inside an application interface and the drawing task group does not include a complete application interface, in a possible case, the drawing task group includes only a drawing task of one incomplete application interface. Refer to FIG. 3C. A drawing task group H2 includes a partial drawing task of the Taobao application. In this case, drawing duration of the drawing task group is a sum of drawing duration of the incomplete application interface and one splitting overhead β. The splitting overhead β is usually related to a quantity of nodes of a render tree of the split application interface, and because the value is generally small, the splitting overhead β may be simplified as a fixed splitting overhead obtained through actual measurement of a system, or may be measured for each application interface. The drawing duration of the incomplete application interface is a product of a split proportion and drawing duration of a complete application interface, and the split proportion is a proportion of the drawing task in the drawing task group in a drawing task of the entire application interface. FIG. 3C is used as an example. In this case, drawing duration of the drawing task group H2 is a product of drawing duration t5 of the Taobao application and k, and k is a proportion of the drawing task group H2 in the drawing task group of the Taobao application.

In another possible case, the drawing task group includes drawing tasks of two incomplete application interfaces. Refer to FIG. 3C. A drawing task group H3 includes a partial drawing task of the Taobao application and a partial drawing task of the status bar application. In this case, drawing duration of the drawing task group is a sum of drawing duration of the two incomplete application interfaces and two splitting overheads β. A proportion of the partial drawing task of the Taobao application included in the drawing task group H3 in the drawing task of the Taobao application is u, where a sum of k and u is 1. A proportion of the partial drawing task of the status bar application included in the drawing task group H3 in the drawing task of the status bar application is e.

In a possible implementation, when the drawing task group includes a drawing task of a complete application interface and a drawing task of an incomplete application interface, where "include" herein means "only include", drawing duration of the drawing task group is second drawing duration, where the second drawing duration is a sum of the first drawing duration and third drawing duration, and the third drawing duration is a sum of drawing duration of complete application interfaces included in the drawing task group.

Refer to FIG. 3C. A drawing task group H4 includes a partial drawing task of the status bar application and a drawing task of the navigation bar application. A proportion of the partial drawing task of the status bar application included in the drawing task group H4 in the drawing task of the status bar application is n, where a sum of e and n is 1. It can be learned that FIG. 3C includes only one incomplete application interface. In this case, the first drawing duration includes one splitting overhead β. When the drawing task group includes drawing tasks of two incomplete application interfaces, the first drawing duration includes two splitting overheads β.

In a possible implementation, drawing duration of the complete application interface may be weighted average drawing duration of the application interface. The weighted average drawing duration is a weighted operation value of fourth drawing duration, fifth drawing duration, and respective weights. The fourth drawing duration is actual measured drawing duration of the application interface in a second frame before the to-be-displayed frame, and the fifth drawing duration is actual measured drawing duration of the application interface in a previous frame of the to-be-displayed frame.

In this embodiment of this application, a load of each application interface is fitted by using historical running time of running each application interface, and weighted average drawing duration of the application interface is used as drawing duration of the application interface, so that a drawing load size of the application interface can be accurately estimated.

In this embodiment of this application, a load of a window is defined as duration in which a CPU processes a drawing operation of the window. A CPU running core frequency changes due to operating system scheduling. In other words, a quantity of instructions executed by the CPU per unit time changes. Therefore, under a same drawing operation of a same application, a difference in drawing duration of a plurality of frames is clear. In this embodiment of this application, a window drawing load is accurately estimated by using weighted average drawing duration of a plurality of frames. A calculation manner of estimating the weighted average drawing duration used in this embodiment of this application can minimize impact of severe load jitter caused by system scheduling.

In this embodiment of this application, a manner of calculating the weighted average drawing duration $\hat{t}_n$ is shown in formulas (3) and (4):

$$\hat{t}_n = (1 - a_{n-1})\hat{t}_{n-2} + a_{n-1}t_{n-1},$$

*where n ≥ 1, and $\hat{t}_0$ = 0 (3); and*

$$a_{n-1} = max(0.1, 0.9 \times a_{n-2}),$$

*where n ≥ 2, and $a_1$ = 1 (4).*

Herein, $\hat{t}_n$ is estimated weighted average drawing duration of an $n^{th}$ frame, namely, a drawing load of the $n^{th}$ frame. $\hat{t}_{n-2}$ is a weighted average load of first n-2 frames. $t_{n-1}$ is a measured load of an $(n-1)^{th}$ frame. $a_{n-1}$ is a weighted average factor whose value is calculated according to Formula (4). To ensure accuracy of weighted average drawing duration of a current frame, a weighted average factor of weighted average drawing duration of a historical frame has greater impact on the weighted average drawing duration of the current frame. Therefore, in this embodiment of this application, a weight of the measured load of the $(n-1)^{th}$ frame is finally determined to be an empirical value, as shown in Formula (4), and the empirical value may be 0.1, 0.2, or the like. When the window is drawn for the first time, that is, n is equal to 1, $\hat{t}_0$ in Formula (3) is defined to be equal to 0, and an average load factor $a_1$ of a first frame in Formula (4) is defined to be equal to 1. In this case, a weighted average load $\hat{t}_1$ of the first frame is equal to an actual load $t_1$. When a second frame to the $n^{th}$ frame are drawn subsequently, the weighted average factor is first calculated according to Formula (4), and then the weighted average drawing duration of the current frame is calculated according to Formula (3).

In a possible implementation, the drawing duration of the complete application interface may be a total quantity of rendering instructions of the application interface. The total quantity of rendering instructions is a weighted operation value of different types of rendering instructions, a quantity of rendering instructions, and weights corresponding to the rendering instructions.

In this embodiment of this application, the total quantity of rendering instructions of the application interface is used as drawing duration of the application interface, so that a drawing load size of the application interface can be accurately estimated.

Specifically, first, a weight corresponding to each rendering instruction is determined, and a specific value of the weight may be set based on an actual situation. For example, execution time required by a rendering instruction is actually measured on different devices, and then average time is calculated as final execution time of the rendering instruction. A rendering instruction with longer execution time has a larger weight. Then, a quantity of each type of rendering instruction required for drawing the application interface is counted, a product of weights of different rendering instructions and a quantity of corresponding instructions is calculated, and then different products are summed up, to obtain the total quantity of rendering instructions of the application interface.

The following specifically describes the rendering method in embodiments of this application by using an example.

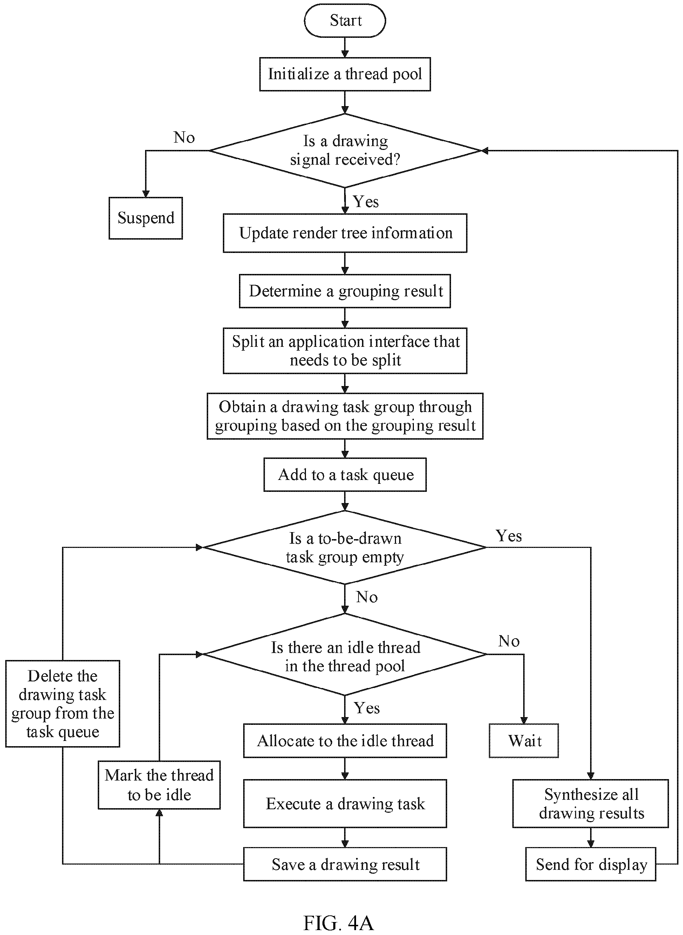

FIG. 4A is a schematic flowchart of a rendering method according to an embodiment of this application. A specific flow package is as follows:

When a graphics rendering module of an electronic device is started, a drawing thread pool for executing a graphics rendering task is first initialized, including creating a drawing resource for each drawing thread. The drawing resource includes a two-dimensional (Second Dimension, 2D for short) engine instance resource and a drawing backend resource. For example, OpenGL is used as a rendering backend. To implement drawing resource sharing among a plurality of threads, a drawing thread creates a shared context resource based on a context of a main thread.

A quantity of threads in the thread pool may be determined based on a hardware capability of a CPU. Further, for a multi-core CPU, a quantity of drawing threads is the same as a quantity of CPU cores, so that each drawing thread runs on an independent CPU core at a same moment, to fully use a multi-core capability of the CPU. Alternatively, a quantity of drawing threads may be less than a quantity of CPU cores. This is not particularly limited.

After the thread pool is initialized, a drawing process of each frame starts. For each frame, it is first checked whether a drawing signal is received. If the drawing signal is not received, the thread pool is suspended. When a frame of drawing signal is received, render tree information, including drawing operation information and attribute information of a render node, is first updated. After the information is updated, a grouping result is determined.

A first value is enabled to meet a preset condition according to Formula (1), to determine a grouping result of a to-be-displayed frame, where the grouping result includes a quantity of parts into which each application interface is split, a proportion of each part, and a manner of grouping at least one application interface. A drawing task of the at least one application interface is processed based on the grouping result, to obtain at least one drawing task group, and the at least one drawing task group is added to a task queue. If there is no application interface that needs to be split, all drawing operation information included in the to-be-displayed frame is packed into one task. If there is an application interface that needs to be split, the application interface is processed according to the following method shown in FIG. 5.

Then, it is determined whether a to-be-drawn task group in the task queue is empty. If the to-be-drawn task group in the task queue is empty, all drawing results are synthesized and sent for display. Otherwise, an idle thread is searched for in the thread pool to process a drawing task in the drawing task group, and it is determined whether there is an idle thread in the thread pool. If there is no idle thread, waiting is performed. If there is an idle thread, the to-be-drawn task group is allocated to the idle thread, and the thread executes the drawing task. Each time after execution of a task in the drawing task group is completed, a drawing result of the drawing task group is saved, a thread that executes the drawing task in the drawing task group is marked to be idle, and the drawing task group is deleted from the task queue. The preceding process is repeated until all tasks in the task queue are executed, and then drawing results of all tasks are synthesized and sent for display.

The following uses a specific example to describe advantages of the rendering method in this embodiment of this application. An example in which an electronic device displays a plurality of foreground applications is used. FIG. 4B is a diagram of single-thread single-frame drawing according to an embodiment of this application. For example, a to-be-displayed frame is used to display five application interfaces: a background application, a TikTok application, a Taobao application, a status bar application, and a navigation bar application. In a split-screen mode, one application (for example, Taobao and TikTok) is displayed in each of a left region and a right region of a screen, that is, the two applications are displayed in parallel. The status bar application is used to display time, a battery level, a network signal, and the like. The navigation bar application is used to switch windows and the like. The Taobao and TikTok applications are free windows, and z-orders of the windows can be changed. It is assumed that the z-order of the Taobao application is large, and the z-order of the TikTok application is small. In this case, a drawing sequence is the background, TikTok, Taobao, the status bar, and the navigation bar in ascending z-order of each application interface. When a drawing task of the to-be-displayed frame is processed by using a single thread, rendering is performed according to a Z-order of an application interface, and it may be determined that drawing duration of a single frame is a sum of respective drawing duration of the five applications, that is, t1+t2+t3+t4+t5, that is, 21 ms in total, where t1 is drawing duration of the background application, t2 is drawing duration of the TikTok application, t3 is drawing duration of the Taobao application, t4 is drawing duration of the status bar application, and t5 is drawing duration of the navigation bar application. t1=3 ms, t2=10 ms, t3=6 ms, t4=1 ms, and t5=1 ms.

FIG. 4C is a diagram of multi-thread drawing according to an embodiment of this application. When the rendering method in this embodiment of this application is used to process the drawing task of the to-be-displayed frame, it is assumed that the CPU of the electronic device has three cores. In this case, the drawing task may be grouped into a maximum of three drawing task groups, and a maximum value of M is 3. It is assumed that a grouping result finally determined by using the method shown in FIG. 2 is that a first drawing task group includes the background application and a 0.4-scale TikTok application. A second drawing task group includes a 0.6-scale TikTok application and a 0.4-scale Taobao application. A third drawing task group includes a 0.6-scale Taobao application, the status bar, and the navigation bar. The grouping result determined by using the rendering method in this application may enable drawing duration of each drawing task group to be equal or close. Therefore, drawing duration of a single frame is drawing duration of any drawing task group. The first drawing task group is used as an example. The drawing duration of the single frame is $t1+t2-1+\beta+M^*\alpha=3+4+0.5+3^*0.5=9$ ms. Compared with that in a single-thread scenario, rendering efficiency can be improved by 57.1%. In addition, in this embodiment of this application, rendering of five application interfaces may be completed in one process, and therefore a cross-window motion effect may be supported.

The following specifically describes the method for splitting a user interface provided in this embodiment of this application.

FIG. 5 is a schematic flowchart of another rendering method according to an embodiment of this application. The rendering method includes the following step.

501: Split a render tree corresponding to a user interface to obtain at least two space trees.

The user interface is at least one application interface. A status operation remains unchanged before and after a drawing node in each space tree is split, and the status operation is an operation of modifying an attribute of a canvas. The at least two space trees are used to render the user interface.

Specifically, because design composition logic of a control on an application interface is a parent-child relationship, for example, for a button control, a parent node of the button control is a background of the button, and a child node of the button control is a text on the button. The parent-child relationship of this type forms a complete render tree. Each node in the render tree includes layout information and recorded drawing operation information. Because an organization relationship of a control may have a sandwich structure, in other words, render nodes may be coupled in space, drawing of a two-dimensional control is a series of stateful and sequential operations. If the drawing task of the application interface needs to be split, it needs to be ensured that a status and sequence of each split drawing task are consistent with those of an original serial drawing task. Therefore, in this embodiment of this application, when the render tree is split, the drawing node corresponding to the user interface is split, and it is ensured that a status operation of the drawing node before and after being split remains unchanged, to obtain at least two space trees through splitting. A specific quantity of space trees may be determined based on an actual situation.

In this embodiment of this application, the render tree corresponding to the user interface is split to obtain the at least two space trees, and it is ensured that the status operation remains unchanged before and after the drawing node in each space tree is split. In this way, when the user interface is obtained through rendering by using the at least two space trees, correctness of a rendering result of the user interface can be ensured. In addition, a rendering task of the user interface is split to obtain at least two space trees, and correct parallel rendering can be supported when rendering is performed by using the at least two space trees.

In a possible implementation, render regions corresponding to the at least two space trees overlap. In this way, time required for splitting the render tree can be reduced, and efficiency of splitting the render tree can be improved.

In a possible implementation, when render regions overlap, an error may occur in a rendering result of an overlapping part. Therefore, in this embodiment of this application, render regions corresponding to the at least two space trees do not overlap. That the render regions do not overlap means that the render regions completely do not overlap. In this way, correctness of a rendering result of the user interface can be further ensured.

In a possible implementation, the step 501 includes the following.

511: Determine circumscribed patterns of render regions corresponding to all drawing nodes in the render tree.

In this embodiment of this application, the drawing node is a render node that is in the render tree and that is configured to perform a drawing operation, and a status operation node is a render node that is in the render tree and that is configured to perform a status operation. For example, the drawing node and the status operation node may be a same render node, that is, the render node is configured to perform a drawing operation and a status operation.

The circumscribed pattern refers to a regular pattern and/or a pattern whose area can be calculated, for example, a rectangle, a circle, a square, or a trapezoid. For example, the circumscribed pattern in this embodiment of this application may be a circumscribed pattern in a common sense, that is, the circumscribed pattern intersects all vertices of the render region. For another example, the circumscribed pattern in this embodiment of this application may be a pattern including a render region. To be specific, vertices of the render region do not intersect the circumscribed pattern. Instead, there is a specific distance, and a specific value of the distance may be set based on an actual requirement. This is not particularly limited herein.

Further, for example, in this embodiment of this application, the circumscribed pattern of the drawing node may be determined based on layout information (including a position, a shape, and the like of the render region) of the drawing node. For another example, a bounding box of the drawing node may be directly used as the circumscribed pattern of the drawing node, and the circumscribed pattern does not need to be re-established, to reduce a processing procedure and improve rendering efficiency.

In this embodiment of this application, the circumscribed pattern corresponding to the render region of the drawing node is determined, to approximately estimate a drawing load size of the drawing node based on the circumscribed pattern.

512: Group the circumscribed patterns corresponding to the drawing nodes in the render tree into at least two sets.

Specifically, a difference between quantities of circumscribed patterns in any two of the at least two sets is less than a first threshold, and/or a difference between sums of areas of circumscribed patterns in any two of the at least two sets is less than a second threshold. Specific values of the first threshold and the second threshold may be set based on an actual situation, and are not particularly limited, so that the quantities of circumscribed patterns in any two of the at least two sets do not differ greatly; and/or the sums of areas of circumscribed patterns in any two of the at least two sets do not differ greatly. This grouping manner can ensure that drawing loads of any two space trees in the at least two space trees obtained through splitting are similar, that is, balanced drawing load-based splitting can be implemented.

For example, when the difference between quantities of circumscribed patterns in any two of the at least two sets is less than the first threshold, the user interface may be abstracted into a two-dimensional array, and obtaining the circumscribed pattern of the drawing node is equal to marking in the two-dimensional array. In this case, a general problem may be abstracted: how to split a region of two groups of arrays, so that a quantity of circumscribed patterns in each region is as equal as possible. The foregoing general problem may be resolved by using a layer-by-layer scanning line algorithm, a line segment tree algorithm, or the like.

For example, render regions corresponding to the at least two sets overlap. In this way, time required for grouping the circumscribed pattern can be reduced. For another example, render regions corresponding to the at least two sets do not overlap. In this way, correctness of a rendering result of the user interface can be further ensured.

For another example, to improve accuracy of grouping the circumscribed pattern, the circumscribed pattern may be first roughly grouped to obtain several small sets, and then the several small sets are combined based on the first threshold and/or the second threshold to obtain the at least two sets. Each small set may include a preset quantity of circumscribed patterns, or each small set may include a preset quantity of adjacent circumscribed patterns. A specific value of the preset quantity may be set based on an actual situation, and is not particularly limited. For example, the preset quantity is 2, 3, 4, or 5. Optionally, a condition corresponding to the first threshold and/or the second threshold is also met between any two small sets. Similarly, several small sets may be obtained through grouping by using the layer-by-layer scanning line algorithm, the line segment tree algorithm, or the like.

513: Split the render tree based on the at least two sets to obtain the at least two space trees.

A space tree corresponding to a set includes a drawing node corresponding to a circumscribed pattern in the set, and a status operation node passed through when backtracking is performed from the drawing node to a root node of the render tree.

Specifically, because shapes of render regions corresponding to the drawing nodes are different, the drawing nodes cannot be accurately grouped. Therefore, in this embodiment of this application, the drawing nodes can be accurately grouped by using circumscribed patterns corresponding to the drawing nodes. In addition, when nodes in the render tree are grouped, the drawing node is first grouped, and then the root node of the render tree is backtracked from the drawing node. The status operation node passed through in the backtracking process and the drawing node are classified into a same set. In this way, it can be ensured that a status operation remains unchanged before and after the drawing node is grouped, to ensure that the space tree obtained through splitting can be correctly rendered.

In addition, during circumscribed pattern grouping, when one circumscribed pattern is grouped into at least two sets (two sets are used as an example, and in this case, one part of the circumscribed pattern belongs to a set A, and the other part of the circumscribed pattern belongs to a set B), and a quantity of circumscribed patterns included in the set is calculated, the circumscribed pattern needs to be included in the at least two sets. In addition, a position of a render region of a drawing node corresponding to the circumscribed pattern covers render regions corresponding to at least two space trees. Therefore, during rendering, it is assumed that at least two drawing threads process drawing tasks corresponding to the at least two space trees corresponding to the at least two sets, and each drawing thread is responsible for processing a drawing task of the circumscribed pattern located in a set corresponding to the drawing thread. For example, a partial region a of the circumscribed pattern of the drawing node is located in the set A, and a remaining partial region b of the circumscribed pattern other than the partial region a is located in the set B. A drawing thread 1 corresponding to a space tree corresponding to the set A processes a drawing task corresponding to the partial region a, and a drawing thread 2 corresponding to a space tree corresponding to the set B processes a drawing task corresponding to the partial region b.

The following describes a specific process of splitting the user interface by using an example in which the user interface is an application interface.

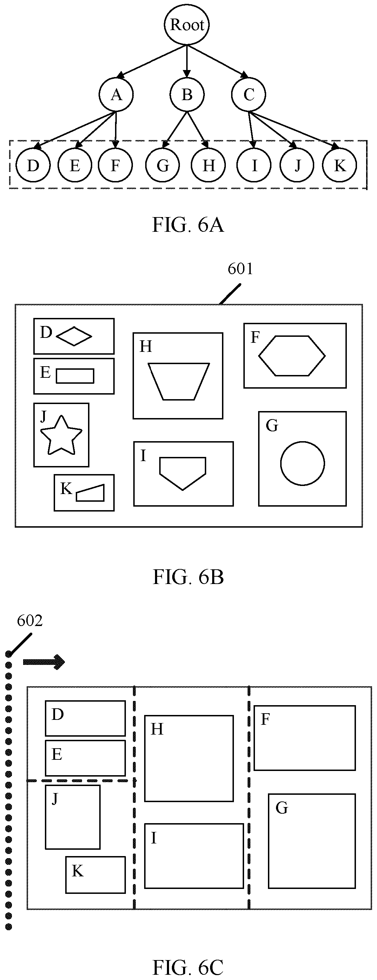

FIG. 6A is a diagram of a render tree according to an embodiment of this application. FIG. 6A is a render tree of an application interface, where root is a root node of the render tree, a node A, a node B, and a node C are status operation nodes, and a node D, a node E, a node F, a node G, a node H, a node I, a node J, and a node K are drawing nodes.

First, as shown in FIG. 6B, FIG. 6B is a diagram of a bounding box of a drawing node according to an embodiment of this application. Layout information of render nodes is obtained from a render tree corresponding to an application interface 601, and then drawing nodes (such as a node D and a node E) are abstracted by using the layout information of the render nodes as a rectangle, namely, a bounding box.

Then, each node (namely, the drawing node) is marked in a region that needs to be rendered, for example, "D", "E", "F", "G", "H", "I", "J", and "K" in FIG. 6B. Then, the rectangle is grouped to obtain at least two sets. For example, two sets are obtained by grouping a rectangle. Rectangles corresponding to the node D, the node E, the node J, and the node K form one set, and rectangles corresponding to the node H, the node I, the node F, and the node G form another set.

For example, in this embodiment, refer to FIG. 6C. FIG. 6C is a diagram of grouping a rectangle according to an embodiment of this application. An entire region that needs to be rendered is split into a plurality of balanced small regions (namely, the foregoing small sets) by using a layer-by-layer scanning line algorithm (for example, a scanning line 602 in FIG. 6C). In other words, each of the plurality of small regions obtained through splitting includes an approximately equal quantity of rectangles (a difference between quantities of rectangles in each small region is less than a first threshold). The small region includes a small region including a rectangle corresponding to the node D and a rectangle corresponding to the node E, a small region including a rectangle corresponding to the node J and a rectangle corresponding to the node K, a small region including a rectangle corresponding to the node H and a rectangle corresponding to the node I, and a small region including a rectangle corresponding to the node F and a rectangle corresponding to the node G. Then, the small regions are combined based on an actual requirement, to obtain at least two sets. For example, two sets are obtained by grouping a rectangle. A small region including a rectangle corresponding to the node D and a rectangle corresponding to the node E and a small region including a rectangle corresponding to the node J and a rectangle corresponding to the node K form a set, and a small region including a rectangle corresponding to the node H and a rectangle corresponding to the node I and a small region including a rectangle corresponding to the node F and a rectangle corresponding to the node G form another set.

Further, the render tree is traversed based on the at least two sets, to construct at least two space trees. Drawing nodes corresponding to rectangles in the set are classified into a same space tree. For each rectangle in the set, backtracking is performed from a node corresponding to the rectangle to a root node, and a status operation node passed through during this period is classified into a space tree in which the rectangle is located.

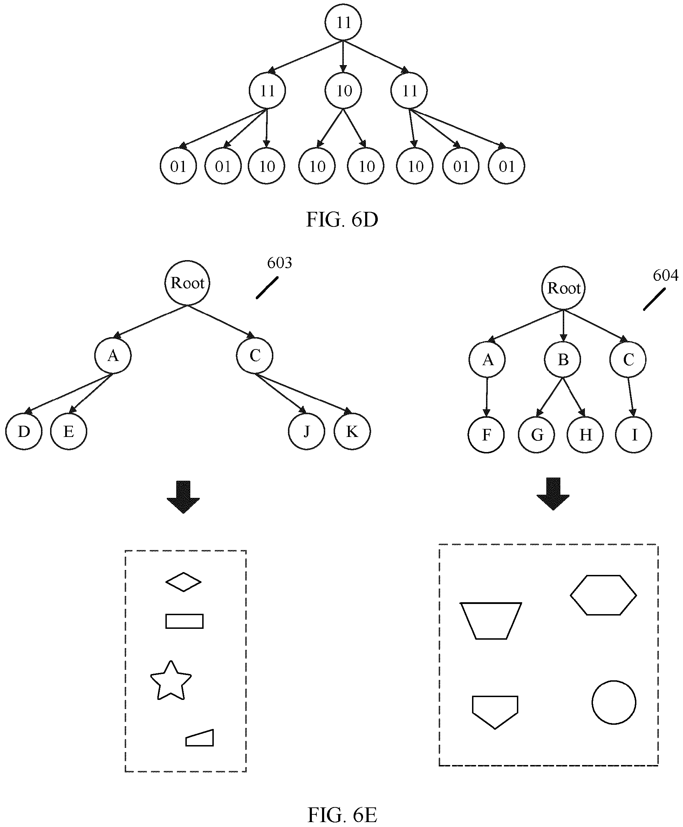

For example, refer to FIG. 6D. FIG. 6D is a diagram of marking a render tree according to an embodiment of this application. When at least two space trees are obtained based on at least two sets, grouping may be performed by using a binary number marking method. Rectangles corresponding to a node D, a node E, a node J, and a node K form a set A, and rectangles corresponding to a node H, a node I, a node F, and a node G form a set B. Because there are two sets, a two-digit binary number can be used to mark a node in the render tree. When the node belongs to the set B, a first digit of the binary number is 1. Otherwise, the first digit of the binary number is 0. When the node belongs to the set A, a second bit of the binary number is 1. Otherwise, the second bit of the binary number is 0. After a node corresponding to a rectangle and a status operation node passed through when backtracking is performed from the node corresponding to the rectangle in the set to a root node are marked by using the foregoing method, at least two space trees may be obtained. For example, the node D is marked as "01", indicating that the node D belongs to the set A, and the node F is marked as "10", indicating that the node F belongs to the set B. The root node is marked as "11", indicating that the root node belongs to the set A and the set B. The render tree in FIG. 6D is split to obtain a space tree 603 corresponding to the set A and a space tree 604 corresponding to the set B shown in FIG. 6E. It can be learned that when a drawing load is measured by using a quantity of rectangles, because a quantity of rectangles corresponding to the space tree 603 is equal to a quantity of rectangles corresponding to the space tree 604, a drawing load proportion is 1/2.

Then, drawing operation information included in each space tree is packaged into a single task based on space tree grouping. Because a space tree is constructed based on a spatial position of a UI control, each space tree represents a drawing task of a region. For example, after the render tree is split, render regions corresponding to space trees do not overlap, and the space tree can ensure that drawing operation information of the space tree is executed in an order of ensured statuses from bottom to top. Therefore, tasks corresponding to the space tree can also be executed in parallel. For example, as shown in FIG. 6E, the render tree is split into the space tree 603 corresponding to the set A and the space tree 604 corresponding to the set B. A left half of the application interface 601 may be obtained by performing rendering based on the space tree 603, and a right half of the application interface 601 may be obtained by performing rendering based on the space tree 604.

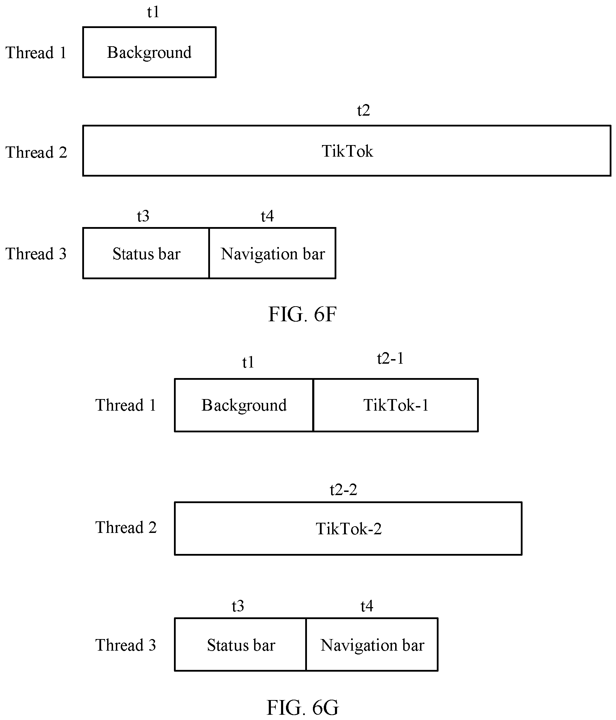

When a system of an electronic device has only one foreground application, and a load of the application is heavy, for example, TikTok, performance of the system depends on a slowest application, and execution duration of TikTok affects overall performance. FIG. 6F is a diagram of a thread allocation of an application interface according to an embodiment of this application. A thread 1 is responsible for processing a rendering task of a background application, and drawing duration required for rendering a frame is t1. A thread 2 is responsible for processing a rendering task of a TikTok application, and drawing duration required for rendering a frame is t2. A thread 3 is responsible for processing rendering tasks of a status bar application and a navigation bar application, and drawing duration required for rendering a frame is t3 and t4 separately. In this case, duration required for completing single-frame rendering depends on a thread with longest drawing duration, namely, drawing duration t2 corresponding to the thread 2. However, according to the solution in this embodiment of this application, a drawing task of the TikTok application may be split to obtain at least two drawing subtasks. In this case, the at least two drawing subtasks may be allocated to at least two threads for processing, to reduce drawing duration required by a single frame. For example, TikTok is split into a drawing subtask corresponding to TikTok-1 (required drawing duration is t2-1) and a drawing subtask corresponding to TikTok-2 (required drawing duration is t2-2). FIG. 6G is a diagram of another thread allocation of an application interface according to an embodiment of this application. It is assumed that the drawing subtask corresponding to TikTok-1 is allocated to the thread 1 for processing, and the drawing subtask corresponding to TikTok-2 is continuously allocated to the thread 2 for processing. In this case, drawing duration of a single frame is t2-2. It can be learned that t2-2 is less than the drawing duration t2 of TikTok. It can be learned that correct parallel rendering can be implemented by using the method in this application, to improve rendering efficiency of an application interface.

The following describes an apparatus provided in this application.

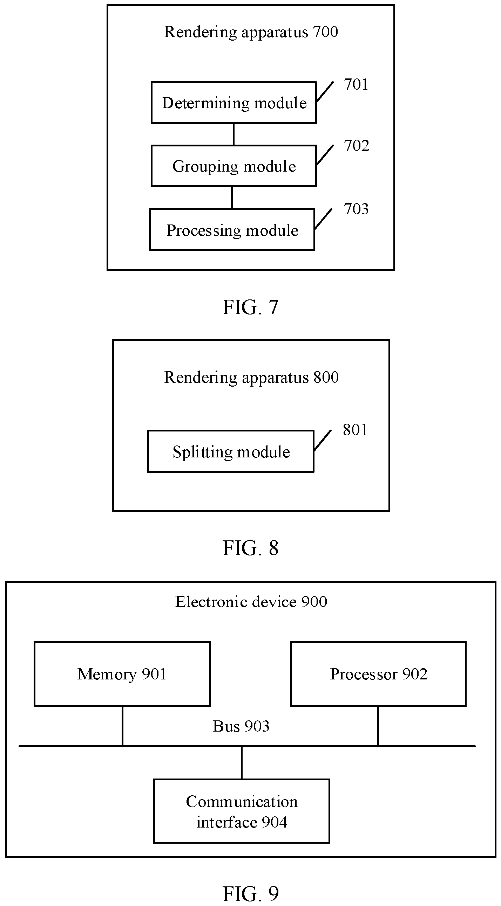

FIG. 7 and FIG. 8 are diagrams of structures of possible rendering apparatuses according to an embodiment of this application. These rendering apparatuses may be configured to implement functions of the foregoing method embodiments, and therefore can implement beneficial effects of the foregoing method embodiments. In this embodiment of this application, the rendering apparatus may be an electronic device, or may be a module (for example, a chip) applied to an electronic device.

As shown in FIG. 7, a rendering apparatus 700 includes a determining module 701, a grouping module 702, and a processing module 703. The rendering apparatus 700 is configured to implement functions in the method embodiment shown in FIG. 2. Alternatively, the rendering apparatus 700 may include a module configured to implement any function or operation in the method embodiment shown in FIG. 2. The module may be completely or partially implemented by using software, hardware, firmware, or any combination thereof.

When the rendering apparatus 700 is configured to implement the function in the method embodiment shown in FIG. 2, the determining module 701 is configured to determine a grouping result corresponding to a to-be-displayed frame. The to-be-displayed frame is used to display at least one application interface, and the grouping result is used to group a drawing task of the at least one application interface into at least one drawing task group, so that drawing duration of the to-be-displayed frame is less than or equal to a sum of drawing duration of the at least one application interface. The grouping module 702 is configured to group the drawing task of the at least one application interface into the at least one drawing task group based on the grouping result. The processing module 703 is configured to process the at least one drawing task group by using at least one drawing thread to obtain at least one drawing result.

In a possible implementation, the rendering apparatus 700 further includes a sending module.

The sending module is configured to send the at least one drawing result.

In a possible implementation, the rendering apparatus 700 further includes a splitting module.

The splitting module is configured to split a render tree corresponding to a user interface to obtain at least two space trees. A status operation remains unchanged before and after a drawing node in each space tree is split, and the status operation is an operation of modifying an attribute of a canvas. The at least two space trees are used to obtain the user interface through rendering. The user interface is at least one of the at least one application interface.

In a possible implementation, render regions corresponding to the at least two space trees do not overlap.

In a possible implementation, the splitting module is specifically configured to: determine circumscribed patterns of render regions corresponding to all drawing nodes in the render tree; group the circumscribed patterns corresponding to the drawing nodes in the render tree into at least two sets, where a difference between quantities of circumscribed patterns in any two of the at least two sets is less than a first threshold, and/or a difference between sums of areas of circumscribed patterns in any two of the at least two sets is less than a second threshold; and split the render tree based on the at least two sets to obtain the at least two space trees. A space tree corresponding to a set includes a drawing node corresponding to a circumscribed pattern in the set, and a status operation node passed through when backtracking is performed from the drawing node to a root node of the render tree.

In a possible implementation, render regions corresponding to the at least two sets do not overlap.

The circumscribed pattern of the render region corresponding to the drawing node is a bounding box of the render region corresponding to the drawing node.

In a possible implementation, at a same moment, one core of a central processing unit CPU in the electronic device executes one drawing thread.

In a possible implementation, the grouping result is a grouping scheme that is of the at least one application interface and whose first value meets a preset condition, and the first value of the grouping scheme is a sum of drawing duration of a longest drawing task group corresponding to the grouping scheme and synthesis duration.

In a possible implementation, when there are two drawing task groups in the grouping scheme, the grouping scheme of the at least one application interface includes a first grouping scheme. The first grouping scheme is splitting an application interface sequence into two parts with equal drawing duration, and the application interface sequence is a sequence obtained by arranging the at least one application interface according to a preset order.

Optionally, the grouping scheme of the at least one application interface further includes a second grouping scheme and/or a third grouping scheme. The second grouping scheme is moving a dichotomy point to a start point of a drawing task of a first application interface when the dichotomy point is located in a drawing task range of the first application interface. The dichotomy point is a position at which the application interface sequence is split into two parts with equal drawing duration, and the first application interface is one of the at least one application interface.

However, the third grouping scheme is moving the dichotomy point to an end point of the drawing task of the first application interface when the dichotomy point is located in the drawing task range of the first application interface.

In a possible implementation, when there are M drawing task groups in the grouping scheme, and M is greater than or equal to three, the grouping scheme of the at least one application interface includes a fourth grouping scheme. The fourth grouping scheme is splitting an application interface sequence into M parts with equal drawing duration.

Optionally, the grouping scheme of the at least one application interface further includes a fifth grouping scheme. The fifth grouping scheme is: when a first M-division point is located in the drawing task range of the first application interface, fixing positions of M-2 of M-1 M-division points in the application interface sequence, and moving the first M-division point to the start point of the drawing task of the first application interface. The M-1 M-division points are positions at which the application interface sequence is split into M parts with equal drawing duration, and the first M-division point is any one of the M-1 M-division points.

Optionally, the grouping scheme of the at least one application interface further includes a sixth grouping scheme. The sixth grouping scheme is: when the first M-division point is located in the drawing task range of the first application interface, fixing M-2 of M-1 M-division points in the application interface sequence, and moving the first M-division point to the end point of the drawing task of the first application interface.

In a possible implementation, drawing duration of the drawing task group is at least one of the following:

when the drawing task group includes a drawing task of a complete application interface, the drawing duration of the drawing task group is a sum of drawing duration of complete application interfaces included in the drawing task group;

when the drawing task group includes a drawing task of an incomplete application interface, the drawing duration of the drawing task group is first drawing duration, where the first drawing duration is a sum of splitting duration and a sum of drawing duration of incomplete application interfaces included in the drawing task group, and the splitting duration is a product of a quantity of the incomplete application interfaces and a splitting overhead; and

when the drawing task group includes a drawing task of a complete application interface and a drawing task of an incomplete application interface, the drawing duration of the drawing task group is second drawing duration, where the second drawing duration is a sum of the first drawing duration and third drawing duration, and the third drawing duration is a sum of drawing duration of complete application interfaces included in the drawing task group.

In a possible implementation, drawing duration of the complete application interface is any one of the following:

weighted average drawing duration of the application interface, where the weighted average drawing duration is a weighted operation value of fourth drawing duration, fifth drawing duration, and respective weights, the fourth drawing duration is actual measured drawing duration of the application interface in a second frame before the to-be-displayed frame, and the fifth drawing duration is actual measured drawing duration of the application interface in a previous frame of the to-be-displayed frame; and

a total quantity of rendering instructions of the application interface, where the total quantity of rendering instructions is a weighted operation value of a quantity of different types of rendering instructions and weights corresponding to the different types of rendering instructions.

As shown in FIG. 8, a rendering apparatus 800 includes a splitting module 801. The rendering apparatus 800 is configured to implement functions in the method embodiment shown in FIG. 5. Alternatively, the rendering apparatus 800 may include a module configured to implement any function or operation in the method embodiment shown in FIG. 5. The module may be completely or partially implemented by using software, hardware, firmware, or any combination thereof.

When the rendering apparatus 800 is configured to implement the function in the method embodiment shown in FIG. 5, the splitting module 801 is configured to split a render tree corresponding to a user interface to obtain at least two space trees. A status operation remains unchanged before and after a drawing node in each space tree is split, and the status operation is an operation of modifying an attribute of a canvas. The at least two space trees are used to render the user interface.

In a possible implementation, render regions corresponding to the at least two space trees do not overlap.

In a possible implementation, the splitting module 801 is specifically configured to:

determine circumscribed patterns of render regions corresponding to all drawing nodes in the render tree; group the circumscribed patterns corresponding to the drawing nodes in the render tree into at least two sets, where a difference between quantities of circumscribed patterns in any two of the at least two sets is less than a first threshold, and/or a difference between sums of areas of circumscribed patterns in any two of the at least two sets is less than a second threshold; and split the render tree based on the at least two sets to obtain the at least two space trees, where a space tree corresponding to a set includes a drawing node corresponding to a circumscribed pattern in the set, a status operation node passed through when backtracking is performed from the drawing node to a root node of the render tree, and in a possible implementation, render regions corresponding to the at least two sets do not overlap.

In a possible implementation, the circumscribed pattern of the render region corresponding to the drawing node is a bounding box of the render region corresponding to the drawing node.

In a possible implementation, the rendering apparatus further includes a determining module.

The determining module is configured to determine a grouping result of a to-be-displayed frame. The to-be-displayed frame is used to display at least one application interface. The grouping result is used to group a drawing task of the at least one application interface into at least one drawing task group, so that drawing duration of the to-be-displayed frame is less than or equal to a sum of drawing duration of the at least one application interface.

In a possible implementation, the rendering apparatus further includes a grouping module and a processing module.

The grouping module is configured to group the drawing task of the at least one application interface into the at least one drawing task group based on the grouping result.

The processing module is configured to process the drawing task in the at least one drawing task group by using at least one drawing thread to obtain at least one drawing result, where the at least one drawing result is used to obtain an overall drawing result of the to-be-displayed frame through synthesis.

In a possible implementation, the rendering apparatus further includes a sending module.

The sending module is configured to send the at least one drawing result.

In a possible implementation, at a same moment, one core of a central processing unit CPU in the electronic device executes one drawing thread.

In a possible implementation, the grouping result is a grouping scheme that is of the at least one application interface and whose first value meets a preset condition, and the first value of the grouping scheme is a sum of drawing duration of a longest drawing task group corresponding to the grouping scheme and synthesis duration. The synthesis duration is a product of a quantity of drawing task groups in the grouping scheme and a synthesis overhead.

In a possible implementation, when there are two drawing task groups in the grouping scheme, the grouping scheme of the at least one application interface includes a first grouping scheme. The first grouping scheme is splitting an application interface sequence into two parts with equal drawing duration, and the application interface sequence is a sequence obtained by arranging the at least one application interface according to a preset order.

Optionally, the grouping scheme of the at least one application interface further includes a second grouping scheme and/or a third grouping scheme. The second grouping scheme is moving a dichotomy point to a start point of a drawing task of a first application interface when the dichotomy point is located in a drawing task range of the first application interface. The dichotomy point is a position at which the application interface sequence is split into two parts with equal drawing duration, and the first application interface is one of the at least one application interface.

However, the third grouping scheme is moving the dichotomy point to an end point of the drawing task of the first application interface when the dichotomy point is located in the drawing task range of the first application interface.

In a possible implementation, when there are M drawing task groups in the grouping scheme, and M is greater than or equal to three, the grouping scheme of the at least one application interface includes a fourth grouping scheme. The fourth grouping scheme is splitting an application interface sequence into M parts with equal drawing duration.

Optionally, the grouping scheme of the at least one application interface further includes a fifth grouping scheme. The fifth grouping scheme is: when a first M-division point is located in the drawing task range of the first application interface, fixing positions of M-2 of M-1 M-division points in the application interface sequence, and moving the first M-division point to the start point of the drawing task of the first application interface. The M-1 M-division points are positions at which the application interface sequence is split into M parts with equal drawing duration, and the first M-division point is any one of the M-1 M-division points.

Optionally, the grouping scheme of the at least one application interface further includes a sixth grouping scheme. The sixth grouping scheme is: when the first M-division point is located in the drawing task range of the first application interface, fixing M-2 of M-1 M-division points in the application interface sequence, and moving the first M-division point to the end point of the drawing task of the first application interface.

In a possible implementation, drawing duration of the drawing task group is at least one of the following:

> when the drawing task group includes a drawing task of a complete application interface, where "include" herein means "only include", the drawing duration of the drawing task group is a sum of drawing duration of complete application interfaces included in the drawing task group;
>
> when the drawing task group includes a drawing task of an incomplete application interface, where "include" herein means "only include", the drawing duration of the drawing task group is first drawing duration, where the first drawing duration is a sum of splitting duration and a sum of drawing duration of incomplete application interfaces included in the drawing task group, and the splitting duration is a product of a quantity of the incomplete application interfaces and a splitting overhead; and
>
> when the drawing task group includes a drawing task of a complete application interface and a drawing task of an incomplete application interface, where "include" herein means "only include", the drawing duration of the drawing task group is second drawing duration, where the second drawing duration is a sum of the first drawing duration and third drawing duration, and the third drawing duration is a sum of drawing duration of complete application interfaces included in the drawing task group.

In a possible implementation, drawing duration of the complete application interface is any one of the following:

weighted average drawing duration of the application interface, where the weighted average drawing duration is a weighted operation value of fourth drawing duration, fifth drawing duration, and respective weights, the fourth drawing duration is actual measured drawing duration of the application interface in a second frame before the to-be-displayed frame, and the fifth drawing duration is actual measured drawing duration of the application interface in a previous frame of the to-be-displayed frame; and a total quantity of rendering instructions of the application interface, where the total quantity of rendering instructions is a weighted operation value of a quantity of different types of rendering instructions and weights corresponding to the different types of rendering instructions.

This application further provides an electronic device. An electronic device 900 shown in FIG. 9 includes a memory 901, a processor 902, a communication interface 904, and a bus 903. The memory 901, the processor 902, and the communication interface 904 implement a communication connection to each other through the bus 903.

The memory 901 may be a read-only memory (Read Only Memory, ROM), a static storage device, a dynamic storage device, or a random access memory (Random Access Memory, RAM). The memory 901 may store a program. When the program stored in the memory 901 is executed by the processor 902, the processor 902 and the communication interface 904 are configured to perform steps of the rendering method in embodiments of this application.

The processor 902 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement a function that needs to be performed by a unit in the rendering apparatus in embodiments of this application, or perform the rendering method in embodiments of this application.

Alternatively, the processor 902 may be an integrated circuit chip, and has a signal processing capability. During implementation, steps of the rendering method in embodiments of this application can be implemented by using a hardware integrated logic circuit or an instruction in a form of software in the processor 902. The processor 902 may alternatively be a general-purpose processor, a digital signal processor (Digital Signal Processor, DSP), an application-specific integrated circuit (ASIC), a field programmable gate array (Field Programmable Gate Array, FPGA) or another programmable logic component, a discrete gate or transistor logic device, or a discrete hardware component; and may implement or perform the methods, the steps, and logical block diagrams that are disclosed in embodiments of this application. The general-purpose processor may be a microprocessor, or the processor may be any conventional processor or the like. The steps of the rendering method provided with reference to embodiments of this application may be directly performed by using a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 901. The processor 902 reads information in the memory 901, and completes, in combination with hardware of the processor 902, functions that need to be performed by units included in the rendering apparatus in embodiments of this application, or performs the rendering method in embodiments of this application.

The communication interface 904 uses a transceiver apparatus, for example but not limited to, a transceiver, to implement communication between the electronic device 900 and another device or a communication network. For example, data may be obtained through the communication interface 904.

The bus 903 may include a channel for transferring information between various components (for example, the memory 901, the processor 902, and the communication interface 904) of the electronic device 900.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A rendering method, wherein the method comprises:

   determining a grouping result of a to-be-displayed frame, wherein the to-be-displayed frame is used to display at least one application interface, and the grouping result is used to group a drawing task of the at least one application interface into at least one drawing task group, so that drawing duration of the to-be-displayed frame is less than or equal to a sum of drawing duration of the at least one application interface;
   grouping the drawing task of the at least one application interface into the at least one drawing task group based on the grouping result; and
   processing the drawing task in the at least one drawing task group by using at least one drawing thread to obtain at least one drawing result, wherein the at least one drawing result is used to obtain an overall drawing result of the to-be-displayed frame through synthesis.

2. The method according to claim 1, wherein the method further comprises:
   sending the at least one drawing result.

3. The method according to claim 1 or 2, wherein the method further comprises:
   splitting a render tree corresponding to a user interface to obtain at least two space trees, wherein a status operation remains unchanged before and after a drawing node in each space tree is split, the status operation is an operation of modifying an attribute of a canvas, the at least two space trees are used to obtain the user interface through rendering, and the user interface is at least one of the at least one application interface.

4. The method according to claim 3, wherein render regions corresponding to the at least two space trees do not overlap.

5. The method according to claim 3 or 4, wherein the splitting a render tree corresponding to a user interface to obtain at least two space trees comprises:

   determining circumscribed patterns of render regions corresponding to all drawing nodes in the render tree;
   grouping the circumscribed patterns corresponding to the drawing nodes in the render tree into at least two sets, wherein a difference between quantities of circumscribed patterns in any two of the at least two sets is less than a first threshold, and/or a difference between sums of areas of circumscribed patterns in any two of the at least two sets is less than a second threshold; and
   splitting the render tree based on the at least two sets to obtain the at least two space trees.

6. The method according to claim 5, wherein render regions corresponding to the at least two sets do not overlap.

7. The method according to claim 5 or 6, wherein the circumscribed pattern of the render region corresponding to the drawing node is a bounding box of the render region corresponding to the drawing node.

8. The method according to any one of claims 1 to 7, wherein at a same moment, one core of a central processing unit CPU in an electronic device executes one drawing thread.

9. The method according to any one of claims 1 to 8, wherein the grouping result is a grouping scheme that is of the at least one application interface and whose first value meets a preset condition, and the first value of the grouping scheme is a sum of drawing duration of a longest drawing task group corresponding to the grouping scheme and synthesis duration.

10. The method according to claim 9, wherein drawing duration of the drawing task group is at least one of the following:

    when the drawing task group comprises a drawing task of a complete application interface, the drawing duration of the drawing task group is a sum of drawing duration of complete application interfaces comprised in the drawing task group; when the drawing task group comprises a drawing task of an incomplete application interface, the drawing duration of the drawing task group is first drawing duration, wherein the first drawing duration is a sum of splitting duration and a sum of drawing duration of incomplete application interfaces comprised in the drawing task group, and the splitting duration is a product of a quantity of the incomplete application interfaces and a splitting overhead; and when the drawing task group comprises a drawing task of a complete application interface and a drawing task of an incomplete application interface, the drawing duration of the drawing task group is second drawing duration, wherein the second drawing duration is a sum of the first drawing duration and third drawing duration, and the third drawing duration is a sum of drawing duration of complete application interfaces comprised in the drawing task group.

11. The method according to claim 10, wherein drawing duration of the complete application interface is any one of the following:

    weighted average drawing duration of the application interface, wherein the weighted average drawing duration is a weighted operation value of fourth drawing duration, fifth drawing duration, and respective weights, the fourth drawing duration is actual measured drawing duration of the application interface in a second frame before the to-be-displayed frame, and the fifth drawing duration is actual measured drawing duration of the application interface in a previous frame of the to-be-displayed frame; and a total quantity of rendering instructions of the application interface, wherein the total quantity of rendering instructions is a weighted operation value of a quantity of different types of rendering instructions and weights corresponding to the different types of rendering instructions.

12. A rendering method, wherein the method comprises: splitting a render tree corresponding to a user interface to obtain at least two space trees, wherein a status operation remains unchanged before and after a drawing node in each space tree is split, the status operation is an operation of modifying an attribute of a canvas, and the at least two space trees are used to render the user interface.

13. The method according to claim 12, wherein render regions corresponding to the at least two space trees do not overlap.

14. The method according to claim 12 or 13, wherein the splitting a render tree corresponding to a user interface to obtain at least two space trees comprises:

    determining circumscribed patterns of render regions corresponding to all drawing nodes in the render tree; grouping the circumscribed patterns corresponding to the drawing nodes in the render tree into at least two sets, wherein a difference between quantities of circumscribed patterns in any two of the at least two sets is less than a first threshold, and/or a difference between sums of areas of circumscribed patterns in any two of the at least two sets is less than a second threshold; and splitting the render tree based on the at least two sets to obtain the at least two space trees, wherein a space tree corresponding to a set comprises a drawing node corresponding to a circumscribed pattern in the set, and a status operation node passed through when backtracking is performed from the drawing node to a root node of the render tree.

15. The method according to claim 14, wherein render regions corresponding to the at least two sets do not overlap.

16. The method according to claim 14 or 15, wherein the circumscribed pattern of the render region corresponding to the drawing node is a bounding box of the render region corresponding to the drawing node.

17. A rendering apparatus, comprising:

a determining module, configured to determine a grouping result of a to-be-displayed frame, wherein the to-be-displayed frame is used to display at least one application interface, and the grouping result is used to group a drawing task of the at least one application interface into at least one drawing task group, so that drawing duration of the to-be-displayed frame is less than or equal to a sum of drawing duration of the at least one application interface;
a grouping module, configured to group the drawing task of the at least one application interface into the at least one drawing task group based on the grouping result; and
a processing module, configured to process the drawing task in the at least one drawing task group by using at least one drawing thread to obtain at least one drawing result, wherein the at least one drawing result is used to obtain an overall drawing result of the to-be-displayed frame through synthesis.

18. The apparatus according to claim 17, wherein the apparatus further comprises:
a sending module, configured to send the at least one drawing result.

19. The apparatus according to claim 17 or 18, wherein the apparatus further comprises:
a splitting module, configured to split a render tree corresponding to a user interface to obtain at least two space trees, wherein a status operation remains unchanged before and after a drawing node in each space tree is split, the status operation is an operation of modifying an attribute of a canvas, the at least two space trees are used to obtain the user interface through rendering, and the user interface is at least one of the at least one application interface.

20. The apparatus according to claim 19, wherein render regions corresponding to the at least two space trees do not overlap.

21. The apparatus according to claim 19 or 20, wherein the splitting module is specifically configured to:

determine circumscribed patterns of render regions corresponding to all drawing nodes in the render tree;
group the circumscribed patterns corresponding to the drawing nodes in the render tree into at least two sets, wherein a difference between quantities of circumscribed patterns in any two of the at least two sets is less than a first threshold, and/or a difference between sums of areas of circumscribed patterns in any two of the at least two sets is less than a second threshold; and
split the render tree based on the at least two sets to obtain the at least two space trees.

22. The apparatus according to claim 21, wherein render regions corresponding to the at least two sets do not overlap.

23. The apparatus according to claim 21 or 22, wherein the circumscribed pattern of the render region corresponding to the drawing node is a bounding box of the render region corresponding to the drawing node.

24. The apparatus according to any one of claims 17 to 23, wherein at a same moment, one core of a central processing unit CPU in an electronic device executes one drawing thread.

25. The apparatus according to any one of claims 17 to 24, wherein the grouping result is a grouping scheme that is of the at least one application interface and whose first value meets a preset condition, and the first value of the grouping scheme is a sum of drawing duration of a longest drawing task group corresponding to the grouping scheme and synthesis duration.

26. The apparatus according to claim 25, wherein drawing duration of the drawing task group is at least one of the following:

when the drawing task group comprises a drawing task of a complete application interface, the drawing duration of the drawing task group is a sum of drawing duration of complete application interfaces comprised in the drawing task group;
when the drawing task group comprises a drawing task of an incomplete application interface, the drawing duration of the drawing task group is first drawing duration, wherein the first drawing duration is a sum of splitting duration and a sum of drawing duration of incomplete application interfaces comprised in the drawing task group, and the splitting duration is a product of a quantity of the incomplete application interfaces and a splitting overhead; and
when the drawing task group comprises a drawing task of a complete application interface and a drawing task of an incomplete application interface, the drawing duration of the drawing task group is second drawing duration, wherein the second drawing duration is a sum of the first drawing duration and third drawing duration, and the third drawing duration is a sum of drawing duration of complete application interfaces comprised in the drawing task group.

27. The apparatus according to claim 26, wherein drawing duration of the complete application interface is any one of the following:

weighted average drawing duration of the application interface, wherein the weighted average drawing duration is a weighted operation value of fourth drawing duration, fifth drawing duration, and respective weights, the fourth drawing duration is actual measured drawing duration of the application interface in a second frame before the to-be-displayed frame, and the fifth drawing duration is actual measured drawing duration of the application interface in a previous frame of the to-be-displayed frame; and
a total quantity of rendering instructions of the application interface, wherein the total quantity of rendering instructions is a weighted operation value of a quantity of different types of rendering instructions and weights corresponding to the different types of rendering instructions.

28. A rendering apparatus, comprising:
a splitting module, configured to split a render tree corresponding to a user interface to obtain at least two space trees, wherein a status operation remains unchanged before and after a drawing node in each space tree is split, the status operation is an operation of modifying an attribute of a canvas, and the at least two space trees are used to render the user interface.

29. The apparatus according to claim 28, wherein render regions corresponding to the at least two space trees do not overlap.

30. The apparatus according to claim 28 or 29, wherein the splitting module is specifically configured to:

determine circumscribed patterns of render regions corresponding to all drawing nodes in the render tree;
group the circumscribed patterns corresponding to the drawing nodes in the render tree into at least two sets, wherein a difference between quantities of circumscribed patterns in any two of the at least two sets is less than a first threshold, and/or a difference between sums of areas of circumscribed patterns in any two of the at least two sets is less than a second threshold; and
split the render tree based on the at least two sets to obtain the at least two space trees, wherein a space tree corresponding to a set comprises a drawing node corresponding to a circumscribed pattern in the set, and a status operation node passed through when backtracking is performed from the drawing node to a root node of the render tree.

31. The apparatus according to claim 30, wherein render regions corresponding to the at least two sets do not overlap.

32. The apparatus according to claim 30 or 31, wherein the circumscribed pattern of the render region corresponding to the drawing node is a bounding box of the render region corresponding to the drawing node.

33. An electronic device, comprising a processor and a memory, wherein the processor is connected to the memory, the memory is configured to store program code, and the processor is configured to invoke the program code, to perform the rendering method according to any one of claims 1 to 16.

34. A computer-readable storage medium, wherein the computer-readable storage medium stores a computer program, and the computer program is executed by a processor, to implement the rendering method according to any one of claims 1 to 16.

FIG. 1

Determine a grouping result of a to-be-displayed frame /201

Group a drawing task of at least one application interface into at least one drawing task group based on the grouping result /202

Process the drawing task in the at least one drawing task group by using at least one drawing thread to obtain at least one drawing result /203

Send the at least one drawing result /204

FIG. 2

301    302    303

304

| Background | TikTok | Taobao | Status bar | Navigation bar |

FIG. 3A

305    306

304

| Background | TikTok | Taobao | Status bar | Navigation bar |

FIG. 3B

304

| | H1 | H2 | H3 | H4 |

| Background | TikTok | Taobao | Status bar | Navigation bar |

k    u    e    n

FIG. 3C

```
                          ┌─────────┐
                          │  Start  │
                          └─────────┘
                               │
                               ▼
                   ┌───────────────────────┐
                   │ Initialize a thread pool │
                   └───────────────────────┘
                               │
          No                   ▼
    ◄──────────────    Is a drawing
                      signal received?
         │                     │
         ▼                   Yes│
    ┌─────────┐                 ▼
    │ Suspend │      ┌───────────────────────────┐
    └─────────┘      │ Update render tree information │
                     └───────────────────────────┘
                                 │
                                 ▼
                     ┌───────────────────────────┐
                     │ Determine a grouping result │
                     └───────────────────────────┘
                                 │
                                 ▼
                     ┌───────────────────────────┐
                     │ Split an application interface that │
                     │      needs to be split      │
                     └───────────────────────────┘
                                 │
                                 ▼
                  ┌──────────────────────────────────┐
                  │ Obtain a drawing task group through │
                  │ grouping based on the grouping result │
                  └──────────────────────────────────┘
                                 │
                                 ▼
                     ┌───────────────────────────┐
                     │     Add to a task queue     │
                     └───────────────────────────┘
                                 │
                                 ▼
                        Is a to-be-drawn          Yes
                        task group empty    ──────────►
                                 │
                               No│
                                 ▼
                      Is there an idle thread      No
                       in the thread pool    ──────────►
                                 │
                              Yes│
                                 ▼
    ┌──────────┐    ┌──────────────────────┐      ┌──────┐
    │ Delete the │   │ Allocate to the idle thread │      │ Wait │
    │ drawing task │  └──────────────────────┘      └──────┘
    │ group from the │          │
    │  task queue  │            ▼
    └──────────┘    ┌──────────────────────┐    ┌──────────────┐
                     │  Execute a drawing task  │    │ Synthesize all │
    ┌──────────┐    └──────────────────────┘    │ drawing results │
    │ Mark the thread │        │                 └──────────────┘
    │  to be idle  │          ▼                        │
    └──────────┘    ┌──────────────────────┐          ▼
                     │   Save a drawing result  │    ┌──────────────┐
                     └──────────────────────┘    │ Send for display │
                                                  └──────────────┘
```

FIG. 4A

34

Drawing duration of a single frame:
t1+t2+t3+t4+t5=21 ms

| Background | TikTok | Taobao | Status bar | Navigation bar |
|---|---|---|---|---|
| t1 | t2 | t3 | t4 | t5 |

FIG. 4B

Drawing duration of a single frame: t1+t2-1+β+M*$a$=9 ms

Main thread

| Wait until a task is completed | Synthesize a result |
|---|---|

t1      t2-1

Drawing thread 1

| Background | TikTok-1 |
|---|---|

t2-2     t3-1

Drawing thread 2

| TikTok-2 | Taobao-1 |
|---|---|

t3-2   t4   t5

Drawing thread 3

| Taobao-2 | Status bar | Navigation bar |
|---|---|---|

FIG. 4C

| Split a render tree corresponding to a user interface to obtain at least two space trees | / 501 |
|---|---|

FIG. 5

FIG. 6A

FIG. 6B

FIG. 6C

FIG. 6D

FIG. 6E

t1

Thread 1 | Background

t2

Thread 2 | TikTok

t3      t4

Thread 3 | Status bar | Navigation bar

FIG. 6F

t1      t2-1

Thread 1 | Background | TikTok-1

t2-2

Thread 2 | TikTok-2

t3      t4

Thread 3 | Status bar | Navigation bar

FIG. 6G

Rendering apparatus 700

Determining module          701

Grouping module          702

Processing module          703

FIG. 7

Rendering apparatus 800

Splitting module          801

FIG. 8

Electronic device 900

Memory 901          Processor 902

Bus 903

Communication
interface 904

FIG. 9

## INTERNATIONAL SEARCH REPORT

| International application No. |
| --- |
| **PCT/CN2024/080397** |

| | |
| --- | --- |
| **A. CLASSIFICATION OF SUBJECT MATTER** | |

G06F9/451(2018.01)i

According to International Patent Classification (IPC) or to both national classification and IPC

**B. FIELDS SEARCHED**

Minimum documentation searched (classification system followed by classification symbols)

IPC: G06F9/-

Documentation searched other than minimum documentation to the extent that such documents are included in the fields searched

Electronic data base consulted during the international search (name of data base and, where practicable, search terms used)

CNABS; CNTXT; CNKI; DWPI; VEN; USTXT; WOTXT; EPTXT; IEEE; 百度, BAIDU: 渲染树, 布局树, 树, 分组, 帧, 应用, 界面, 并行, 渲染, 拆分, 分割, render tree, layout tree, tree, group, frame, application, interface, parallel, render, split, segment, separate

**C. DOCUMENTS CONSIDERED TO BE RELEVANT**

| Category* | Citation of document, with indication, where appropriate, of the relevant passages | Relevant to claim No. |
| --- | --- | --- |
| E | CN 117806745 A (HUAWEI TECHNOLOGIES CO., LTD.) 02 April 2024 (2024-04-02) description, paragraphs 91-354, and figures 1-16 | 1-2, 17-18, 33-34 |
| X | CN 110764849 A (UC MOBILE LTD.) 07 February 2020 (2020-02-07) description, paragraphs 45-95, and figures 1-3 | 1-2, 8-11, 17-18, 24-27, 33-34 |
| Y | CN 110764849 A (UC MOBILE LTD.) 07 February 2020 (2020-02-07) description, paragraphs 45-95, and figures 1-3 | 3-13, 19-29, 33-34 |
| Y | LIXENON. "前端女娲补天CSS(七)什么是DOM树,什么是CSS树,什么是渲染树 (Non-official translation: Front-end Nuwa Patching the Sky CSS (Part 7) What is the DOM Tree, What is the CSS Tree, What is the Render Tree)" *CSDN blog, [online], [search date 10 May 2024], search on the Internet: <URL:https://blog.csdn.net/LiXenon/article/details/125036539>*, 29 May 2022 (2022-05-29), pages 1-8 page 2 | 3-13, 19-29, 33-34 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 May 2024** | **16 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/080397**

**C.    DOCUMENTS CONSIDERED TO BE RELEVANT**

| Category* | Citation of document, with indication, where appropriate, of the relevant passages | Relevant to claim No. |
|---|---|---|
| Y | 马小兜 (MA, Xiaodou). "详解浏览渲染原理 (Non-official translation: Detailed Explanation of Browsing Rendering Principles)" <br> *CSDN blog, [online], [search date 10 May 2024], search on the Internet:* <br> *<URL:https://blog.csdn.net/weixin_43514149/article/details/107585353>,* <br> 26 July 2020 (2020-07-26), pages 1-17 <br> page 5 | 3-13, 19-29, 33-34 |
| X | CN 103310475 A (TENCENT TECHNOLOGY (SHENZHEN) CO., LTD.) 18 September 2013 (2013-09-18) <br> description, paragraphs 70-148, and figures 1-7 | 1-2, 8-11, 17-18, 24-27, 33-34 |
| A | US 2009135180 A1 (SIEMENS CORPORATE RESEARCH, INC.) 28 May 2009 (2009-05-28) <br> entire document | 1-34 |

Form PCT/ISA/210 (second sheet) (July 2022)

## INTERNATIONAL SEARCH REPORT
### Information on patent family members

International application No.

**PCT/CN2024/080397**

| Patent document cited in search report | | | Publication date (day/month/year) | Patent family member(s) | | | Publication date (day/month/year) |
|---|---|---|---|---|---|---|---|
| CN | 117806745 | A | 02 April 2024 | None | | | |
| CN | 110764849 | A | 07 February 2020 | None | | | |
| CN | 103310475 | A | 18 September 2013 | CN | 103310475 | B | 12 September 2017 |
| US | 2009135180 | A1 | 28 May 2009 | US | 8330763 | B2 | 11 December 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310267611